# EUROPÄISCHE PATENTANMELDUNG

(11) **EP 4 686 537 A1**
(43) Veröffentlichungstag der Anmeldung: **04.02.2026**
(21) Anmeldenummer: 24192336.6
(22) Anmeldetag: 01.08.2024
(51) Int. Cl.: B25J 19/00

(54) **ARBEITSGERÄT**

(71) Anmelder: EFS-Gesellschaft für Hebe- und Handhabungstechnik mbh, 74226 Nordheim (DE)
(72) Erfinder: Geenen, Aaron, 74193 Schwaigern-Niederhofen (DE)
(74) Vertreter: Karzel, Philipp

(57) **Zusammenfassung**

Die Erfindung betrifft ein Arbeitsgerät zum Heben und Bewegen einer externen Last (1), umfassend einen Grundkörper (14), ein Haltemittel (10) für die Last (1), wobei das Haltemittel (10) gegenüber dem Grundkörper (14) bewegbar ist, mindestens eine Antriebsvorrichtung (52), die zur Bewegung des Haltemittels (10) zusammen mit der Last (1) ausgelegt ist, und eine Steuereinheit (11) zur Steuerung der Antriebsvorrichtung (52). Das Haltemittel (10) ist zusammen mit der Last (1) von der Steuereinheit (11) mittels der Antriebsvorrichtung (52) zumindest abschnittsweise automatisch bewegbar. Das Arbeitsgerät umfasst eine Gewichtkompensationsvorrichtung (24) zur Aufnahme zumindest eines Teils der Gewichtskraft der externen Last (1), insbesondere während der automatischen Bewegung der Last (1) mittels der Antriebsvorrichtung (52). Die Kraftaufbringung der Gewichtkompensationsvorrichtung (24) ist, insbesondere mittels der Steuereinheit (11), anpassbar.

## Beschreibung

Die Erfindung betrifft ein Arbeitsgerät zum Heben und Bewegen einer externen Last nach dem Oberbegriff des Anspruchs 1.

Es sind Industrieroboter bekannt, die mittels Greifarmen Lasten vollautomatisch von einem Punkt zum anderen bewegen können. Hierbei werden auch große Lasten befördert und es sind entsprechend aufwändige Sicherheitsvorkehrungen zu treffen. Ein besonderes Gefährdungspotenzial liegt in möglichen Kollisionen zwischen Maschine und Mensch. Im Betrieb des Industrieroboters muss sich der Mensch daher außerhalb eines abgesperrten Sicherheitsbereichs aufhalten. Beim Ausfall eines Antriebs, der für das Halten und Führen der Last verantwortlich ist, kann durch die Last großer Schaden entstehen.

Der Erfindung liegt die Aufgabe zugrunde, ein Arbeitsgerät zum Heben und Bewegen einer externen Last zu schaffen, mit dem ein sicheres und komfortables Heben und Bewegen einer externen Last möglich ist.

Diese Aufgabe wird durch ein Arbeitsgerät mit den Merkmalen des Anspruchs 1 gelöst.

Eine weitere Aufgabe der Erfindung liegt darin, ein Verfahren zum Betrieb eines Arbeitsgeräts zum Heben und Bewegen einer externen Last anzugeben, mit dem ein sicheres und komfortables Heben und Bewegen einer externen Last möglich ist.

Diese Aufgabe wird durch ein Verfahren mit den Merkmalen des Anspruchs 15 gelöst.

Erfindungsgemäß ist vorgesehen, dass das Arbeitsgerät eine Gewichtkompensationsvorrichtung umfasst. Die Gewichtkompensationsvorrichtung dient zur Aufnahme zumindest eines Teils der Gewichtskraft der externen Last. Insbesondere dient die Gewichtkompensationsvorrichtung zur Aufnahme zumindest eines Teils der Gewichtskraft der externen Last während der Bewegung der Last mittels der Antriebsvorrichtung. Dadurch kann die Antriebsvorrichtung mit einer sehr geringen Kraft die Last von einem Punkt zum anderen bewegen. Die Gewichtskraft wird zumindest zum Teil, insbesondere zu einem sehr großen Anteil von der Gewichtkompensationsvorrichtung kompensiert. Die Kraftaufbringung der Gewichtkompensationsvorrichtung ist anpassbar. Insbesondere ist die Kraftaufbringung der Gewichtkompensationsvorrichtung mittels der Steuereinheit anpassbar. Insbesondere ist die Kraftaufbringung der Gewichtkompensationsvorrichtung elektronisch anpassbar. Insbesondere ist die Kraftaufbringung der Gewichtkompensationsvorrichtung durch einen Motor anpassbar.

Dadurch, dass die Gewichtkompensationsvorrichtung zumindest einen Teil der Gewichtskraft der externen Last aufnimmt, kann das Arbeitsgerät sicher betrieben werden. Dadurch, dass das Haltemittel zusammen mit der Last von der Steuereinheit mittels der Antriebsvorrichtung zumindest abschnittsweise automatisch bewegbar ist, ist mittels des Arbeitsgeräts ein komfortables Heben und Bewegen der externen Last möglich. Bei einem Ausfall der Antriebsvorrichtung wird das Gewicht der Last immer noch von der Gewichtkompensationsvorrichtung aufgenommen. Die Bewegung des Haltemittels mittels der Antriebsvorrichtung ist auf sehr sicherer Weise möglich, da die Gewichtskraft der Last und der Bauteile des Arbeitsgeräts nicht oder nur zu einem geringen Anteil von der Antriebsvorrichtung aufgenommen werden. Die Bewegung durch die Antriebsvorrichtung ist daher auf sichere Weise möglich. Für die Bewegung durch die Antriebsvorrichtung muss nur eine geringe Menge Energie, insbesondere nur eine geringe Kraft aufgebracht werden. Im Fehlerfall, insbesondere bei einem Ausfall der Antriebsvorrichtung, ist das Gefährdungspotential gering. Die Gewichtkompensationsvorrichtung muss nicht so ausgelegt werden, dass sie beliebige Bewegung des Haltemittels im Raum ermöglicht. Es genügt, dass die Gewichtkompensationsvorrichtung zur Aufnahme der in Richtung der Gewichtskraft wirkenden Kraft ausgelegt ist. Dadurch kann ein hoher Sicherheitsstandard für die Gewichtkompensationsvorrichtung erreicht werden.

Dadurch, dass die Gewichtkompensationsvorrichtung zumindest einen Teil der Gewichtskraft der externen Last aufnimmt, ist für das Bewegen der Last nur eine sehr kleine Kraft erforderlich. Motoren der Antriebsvorrichtung können entsprechend klein und kostengünstig ausgelegt werden. Insbesondere ist die von der Antriebsvorrichtung zum Bewegen des Haltemittels zusammen mit der Last erforderliche Kraft im Verhältnis zur Gewichtskraft der Last klein. Im Falle einer Kollision zwischen dem Arbeitsgerät und einem Werker während einer Bewegung des Haltemittels, insbesondere gemeinsam mit der Last, sind aufgrund der nur geringen von der Antriebsvorrichtung für die Bewegung des Haltemittels, insbesondere zusammen mit der Last, aufzubringenden Kraft keine besonderen Sicherheitsvorkehrungen erforderlich. Insbesondere kann sich der Werker im Arbeitsbereich des Arbeitsgeräts aufhalten. Bei einer Kollision muss der Werker nur die von der Antriebsvorrichtung aufgebrachte Kraft aufbringen, um die Bewegung des Arbeitsgeräts zu stoppen. Da diese Kraft gering ist, kann sich der Werker auch während einer Bewegung des Haltemittels, insbesondere zusammen mit der Last, im Arbeitsbereich des Arbeitsgeräts aufhalten.

Zweckmäßig ist die Gewichtkompensationsvorrichtung separat von der Antriebsvorrichtung ausgebildet. Insbesondere sind die Gewichtskompensationsvorrichtung und die Antriebsvorrichtung vollständig getrennt voneinander ausgebildet. Insbesondere handelt es sich bei der Gewichtkompensationsvorrichtung und der Antriebsvorrichtung um zwei getrennte Antriebsstränge. Dadurch sind die Gewichtskompensation und die Bewegung funktional getrennt voneinander. Das Arbeitsgerät kann dadurch so ausgebildet sein, dass die Antriebsvorrichtung keine sicherheitsrelevante Funktion übernehmen muss.

Insbesondere ist mittels der Antriebsvorrichtung eine Bewegung des Haltemittels in alle drei Raumrichtungen möglich. Zweckmäßig ist mittels der Antriebsvorrichtung eine Drehung um drei verschiedene Raumachsen möglich. Insbesondere ist mittels der Antriebsvorrichtung eine Bewegung der Last in bis zu sechs Freiheitsgraden möglich. Zweckmäßig ist mittels der Gewichtkompensationsvorrichtung ausschließlich eine Lageänderung des Haltemittels in Gewichtskraftrichtung möglich.

Insbesondere umfasst die Gewichtkompensationsvorrichtung einen Motor. Der Motor ist eine Kraftmaschine, die mechanische Arbeit verrichtet, indem sie eine Energieform, z. B. thermische, chemische, hydraulische, pneumatische oder elektrische Energie in Bewegungsenergie umwandelt. Hierbei muss der Motor nicht zwingend eine Bewegung bewirken. Der Motor kann auch Kraft aufbringen, um eine Last in einer bestimmten Position zu halten. Insbesondere kann der Motor der Gewichtskraft entgegenwirken.

Insbesondere ist die Gewichtkompensationsvorrichtung Bestandteil einer Balanceeinheit. Die Balanceeinheit dient zur Aufnahme der Gewichtskraft der externen Last, insbesondere des Arbeitsgeräts und der externen Last. Insbesondere umfasst die Balanceeinheit ein Gegengewicht. Insbesondere ist das Gegengewicht separat von der Gewichtkompensationsvorrichtung ausgebildet.

Vorteilhaft nimmt die Balanceeinheit, insbesondere die Gewichtkompensationsvorrichtung, mindestens 90%, insbesondere mindestens 95%, insbesondere mindestens 98%, bevorzugt mindestens 99% der Gewichtskraft der Last, insbesondere der Gewichtskraft der Last und des Arbeitsgeräts, auf. Es kann auch vorgesehen sein, dass die Balanceeinheit, insbesondere die Gewichtkompensationsvorrichtung, 100% der Gewichtskraft der Last, insbesondere der Gewichtskraft der Last und des Arbeitsgeräts, aufnimmt.

Vorteilhaft ist der Grundkörper mittels zumindest eines Bauelements mit dem Haltemittel zum Heben und Bewegen des Haltemittels gemeinsam mit der Last mechanisch verbunden. Insbesondere ist das Bauteil ein Arm des Arbeitsgeräts. Insbesondere ist das Bauteil einteilig ausgebildet. Insbesondere ist das Bauelement biegesteif. Insbesondere besitzt das Bauelement keine Schwenkachse. Insbesondere ist das Bauelement in seiner Form unveränderlich. Es kann aber auch vorgesehen sein, dass das Bauteil ein Seil und eine Seilführung umfasst, die durch die Antriebsvorrichtung bewegbar ist. Insbesondere kann die Seilführung eine Seilrolle sein.

Vorteilhaft kann eine Bewegung des Haltemittels zusammen mit der Last durch die Bewegung des zumindest einen Bauelements relativ zum Grundkörper in eine Bewegungsrichtung bewirkt werden.

Insbesondere ist das Arbeitsgerät so ausgelegt, dass das Arbeitsgerät, insbesondere das Haltemittel, eine identische Bewegung ausführen kann sowohl durch Einwirkung allein der Antriebsvorrichtung als auch durch Einwirkung allein der Gewichtkompensationsvorrichtung. Dies gilt insbesondere im lastfreien Betrieb des Arbeitsgeräts. Insbesondere können die Gewichtkompensationsvorrichtung und die Antriebsvorrichtung auf ein und dasselbe Bauelement des Arbeitsgeräts wirken. Insbesondere ist das Bauelement längs einer Translationsachse oder um eine Rotationsachse bewegbar. Zweckmäßig wirken sowohl die Gewichtkompensationsvorrichtung als auch die Antriebsvorrichtung zumindest teilweise in Richtung einer Bewegung ein und desselben Bauelements um die Rotationsachse oder längs der Translationsachse dieses Bauelements. Beim Heben und Halten einer Last nimmt die Gewichtkompensationsvorrichtung hierbei den Großteil der Gewichtskraft der Last auf, während die Antriebsvorrichtung für eine Bewegung der Last im Raum vorgesehen ist.

Zweckmäßig umfasst die Gewichtkompensationsvorrichtung mindestens einen ersten Aktor. Insbesondere umfasst die Antriebsvorrichtung mindestens einen zweiten Aktor. Sowohl der erste Aktor als auch der zweite Aktor wirken unmittelbar auf das zumindest eine Bauelement ein. Insbesondere sind sowohl der erste Aktor als auch der zweite Aktor beide unmittelbar an dem zumindest einen Bauelement gelagert sind. Dadurch kann der erste Aktor zumindest einen Teil der Gewichtskraft der Last, und insbesondere einen Teil der Gewichtskraft des Arbeitsgeräts, aufnehmen. Gleichzeitig kann das Bauelement mittels des zweiten Aktors bewegt werden. Diese Trennung von Aufnahme der Gewichtskraft und Bewegung des Bauelement erhöht die Sicherheit des Arbeitsgeräts.

Insbesondere ist das Bauelement gegenüber dem Grundkörper beweglich zumindest mittelbar, insbesondere unmittelbar, am Grundkörper gelagert.

Vorteilhaft können sowohl der erste Aktor alleine als auch der zweite Aktor alleine derart auf das zumindest eine Bauelement einwirken, dass auf das zumindest eine Bauelement durch den ersten Aktor alleine oder durch den zweiten Aktor alleine eine Kraft auf das Bauelement in dieselbe Bewegungsrichtung wirkt. Die Bewegungsrichtung verläuft insbesondere in einer Ebene, die sich in Gewichtskraftrichtung erstreckt. Es kann auch vorgesehen sein, dass die Bewegungsrichtung in Gewichtskraftrichtung verläuft.

In vorteilhafter Weiterbildung der Erfindung sind zwischen dem Grundkörper und dem Haltemittel mehrere Bauelemente angeordnet. Die mehreren Bauelemente sind gegeneinander beweglich. Jedem Bauelement ist ein erster Aktor und ein zweiter Aktor zugeordnet. Der erste Aktor und der zweite Aktor weisen jeweils die vorstehend beschriebenen Eigenschaften auf. Insbesondere sind benachbarte Bauelement jeweils miteinander durch ein Lager verbunden. Insbesondere sind das Haltemittel und der Grundkörper ausschließlich über die mehreren Bauelemente verbunden. Insbesondere ist allen der mehreren Bauelement jeweils ein erster Aktor und jeweils ein zweiter Aktor zugeordnet. Dadurch ist sichergestellt, dass die Gewichtskraft durch die ersten Aktoren der Gewichtskompensationsvorrichtung aufgenommen und in den Grundkörper geleitet wird. Die zweiten Aktoren der Antriebsvorrichtung können nahezu unbelastet durch die Gewichtskraft eine Bewegung des Haltemittels bewirken.

Vorteilhaft sind an jedem Bauelement des Arbeitsgeräts, das relativ zu einem unmittelbar über ein Gelenk verbundenem, unmittelbar benachbartem Bauelement mittels des Gelenks eine Bewegung in Richtung der Gewichtskraft ausführen kann, eine mechanische Abstützvorrichtung, die die beiden benachbarten Bauelemente mechanisch zur Unterbindung einer Bewegung des funktional weiter vom Grundkörper entfernten Bauelements miteinander koppelt oder mindestens ein erster Aktor der Gewichtkompensationsvorrichtung und mindestens ein zweiter Aktor der Antriebsvorrichtung vorgesehen. Dadurch ist sichergestellt, dass die Gewichtkompensationsvorrichtung die gesamte Gewichtskraft aufnehmen kann. Insbesondere kann die Gewichtkompensationsvorrichtung die gesamte Gewichtskraft an den Grundkörper weiterleiten. Die Gewichtkompensationsvorrichtung kann dadurch jedes Bauelement, das eine Bewegung in Gewichtskraftrichtung ausführen kann, gegen eine solche Bewegung unterstützen, und insbesondere eine solche Bewegung verhindern.

Insbesondere regelt die Steuereinheit die Kraftaufbringung der Gewichtkompensationsvorrichtung, insbesondere des ersten Aktors der Gewichtkompensationsvorrichtung, insbesondere aller ersten Aktoren der Gewichtkompensationsvorrichtung, so dass eine Größe der Antriebsvorrichtung, insbesondere des zweiten Aktors der Antriebsvorrichtung, insbesondere aller zweiten Aktoren der Antriebsvorrichtung, unterhalb eines Schwellwerts liegt. Die Größe der Antriebsvorrichtung kann beispielsweise die Stromstärke des Stroms durch die Antriebsvorrichtung, die Antriebsleistung der Antriebsvorrichtung und/oder die Kraft, die die Antriebsvorrichtung zum Halten und Bewegen der Last aufbringen muss, sein. Der Schwellwert ist dann jeweils ein Stromschwellwert, ein Leistungsschwellwert und/oder ein Kraftschwellwert.

Vorteilhaft regelt die Steuereinheit die Kraftaufbringung der Gewichtkompensationsvorrichtung, insbesondere des ersten Aktors, insbesondere aller ersten Aktoren der Gewichtskompensationsvorrichtung, so, dass die Kraft, die die Antriebsvorrichtung, insbesondere die der zweite Aktor, insbesondere alle zweiten Aktoren der Antriebsvorrichtung, zum Halten und Bewegen der Last aufbringen muss unter einem Kraftschwellwert liegt. Insbesondere ist der Kraftschwellwert 800 N, insbesondere 700 N, insbesondere 500 N, insbesondere 150 N. Diese Werte gelten insbesondere für einen einzigen zweiten Aktor der Antriebsvorrichtung. Wenn mehrere zweite Aktoren vorgesehen sind, entspricht der Kraftschwellwert der Summe der Kräfte, die alle zweiten Aktoren der Antriebsvorrichtung, zum Halten und Bewegen der Last aufbringen müssen. Es gelten die bereits genannten Werte.

Zweckmäßig regelt die Steuereinheit die Kraftaufbringung der Gewichtkompensationsvorrichtung, insbesondere des ersten Aktors, insbesondere aller ersten Aktoren der Gewichtskompensationsvorrichtung, so, dass die Antriebsleistung, mit der die Antriebsvorrichtung, insbesondere der zweite Aktor, insbesondere alle zweiten Aktoren der Antriebsvorrichtung, zum Halten und Bewegen der Last betrieben werden muss unter einem Leistungsschwellwert liegt. Insbesondere ist der Leistungsschwellwert 1 kW, insbesondere 0,8 kW, insbesondere 0,5 kW, insbesondere 0,2 kW. Diese Werte gelten insbesondere für einen einzigen zweiten Aktor der Antriebsvorrichtung. Wenn mehrere zweite Aktoren vorgesehen sind, werden diese Werte mit der Anzahl der zweiten Aktoren multipliziert, um den Leistungswellwert zu erhalten.

Insbesondere regelt die Steuereinheit die Kraftaufbringung der Gewichtkompensationsvorrichtung, insbesondere des ersten Aktors, insbesondere aller ersten Aktoren der Gewichtskompensationsvorrichtung, so, dass die Stromstärke des Stroms, der durch die Antriebsvorrichtung, insbesondere durch den zweiten Aktor, insbesondere durch alle zweiten Aktoren der Antriebsvorrichtung, zum Halten und Bewegen der Last fließt unter einem Stromschwellwert liegt. Insbesondere ist der Stromschwellwert 5 A, insbesondere 3 A, insbesondere 2 A, insbesondere 1 A.

Dadurch muss die Antriebsvorrichtung lediglich eine geringe Kraft zum Halten und Bewegen der Last aufbringen.

Vorteilhaft beträgt die Nennleistung des zweiten Aktors, insbesondere die Summe der Nennleistungen aller zweiten Aktoren der Antriebsvorrichtung, höchstens 30%, insbesondere höchstens 20%, insbesondere höchstens 10%, insbesondere höchstens 5% der Nennleistung des ersten Aktors, insbesondere der Summe der Nennleistungen aller ersten Aktoren der Gewichtkompensationsvorrichtung. Dadurch können für die wegen der Gewichtskompensation sicherheitsrelevanten ersten Aktoren leistungsstarke Motoren eingesetzt werden und für die zweiten Aktoren, die lediglich zur Bewegung des Haltemittels, insbesondere der Last, im Raum dienen können leistungsschwächere Motoren eingesetzt werden. Dies ist kosten- und energieeffizient.

Insbesondere ist das Haltemittel ohne Unterstützung durch die Kraft eines Werkers zumindest abschnittsweise automatisch mittels der Antriebsvorrichtung bewegbar. Dies ermöglicht ein komfortables Bewegen der Last. Der Werker muss hierbei nicht kraftunterstützend eingreifen. Zweckmäßig ist das Haltemittel von der Steuereinheit mittels der Antriebsvorrichtung in eine Endposition des Haltemittels positionierbar. Dadurch kann die Last mittels der Antriebsvorrichtung auf komfortable Weise in die Endposition gebracht werden.

Insbesondere ist das Haltemittel vollautomatisch von einer Startposition des Haltemittels in eine Endposition des Haltemittels bewegbar, insbesondere positionierbar. Dies ermöglicht einen besonders komfortablen Betrieb des Arbeitsgeräts. Der Werker muss keine Kraft aufbringen, um die Last von der Startposition in die Endposition zu befördern.

Insbesondere ist das Haltemittel von der Steuereinheit mittels der Antriebsvorrichtung vollautomatisch von einer Startposition des Haltemittels in eine Endposition des Haltemittels bewegbar, insbesondere positionierbar. Dadurch ist mittels der Steuereinheit ein komfortabler Betrieb des Arbeitsgeräts möglich.

Vorteilhaft ist das Arbeitsgerät so ausgelegt, dass das Haltemittel ohne Unterstützung durch die Kraft eines Werkers die Last vollautomatisch an eine von der Steuereinheit vorgegebene Position bewegt. Insbesondere kann die Positionierung des Haltemittels ausschließlich durch die Steuereinheit und die Antriebsvorrichtung erfolgen, insbesondere bei gleichbleibender Kraftaufbringung der Gewichtskompensationsvorrichtung.

Zweckmäßig beträgt die von der Antriebsvorrichtung zum Bewegen des Haltemittels zusammen mit der Last aufbringbare Kraft maximal 800 N, insbesondere maximal 700 N, insbesondere maximal 500 N, insbesondere maximal 150 N. Dadurch ist die von der Antriebsvorrichtung aufzubringende Kraft, insbesondere die von der Antriebsvorrichtung aufzubringende Leistung gering. Die Antriebsvorrichtung kann einfach und kostengünstig gestaltet sein. Während des Bewegens des Haltemittels zusammen mit der Last muss die Antriebsvorrichtung keine große, insbesondere keine sicherheitsrelevante, Kraft aufbringen.

Vorteilhaft beträgt die von der Antriebsvorrichtung zum Bewegen des Haltemittels gemeinsam mit der Last aufbringbare Kraft mindestens 10 N, insbesondere mindestens 20 N, insbesondere mindestens 30 N.

Vorteilhaft ist das Arbeitsgerät, insbesondere die Gewichtkompensationsvorrichtung, so ausgelegt, dass mittels des Haltemittels eine externe Last mit einem Gewicht von mindestens 10 kg, insbesondere von mindestens 30 kg, insbesondere von mindestens 100 kg, gehalten werden kann. Insbesondere ist das Arbeitsgerät, insbesondere die Gewichtkompensationsvorrichtung, so ausgelegt, dass mittels des Haltemittels eine externe Last mit einem Gewicht von maximal 1000 kg, insbesondere von maximal 300 kg, insbesondere von maximal 160 kg, gehalten werden kann. Insbesondere ist das Arbeitsgerät, insbesondere die Gewichtkompensationsvorrichtung, zum Halten einer Last aus einem Lastbereich von 10 kg bis 1000 kg, insbesondere von 10 kg bis 300 kg, insbesondere von 30 kg bis 1000 kg, insbesondere von 30 kg bis 300 kg, insbesondere von 30 kg bis 160 kg ausgelegt. Dadurch ist das Arbeitsgerät zum Heben und Bewegen einer externen Last auch für industrielle Zwecke geeignet.

Zweckmäßig beträgt die von der Gewichtkompensationsvorrichtung zum Halten des Haltemittels zusammen mit der Last aufbringbare Kraft mindestens 100 N, insbesondere mindestens 300 N, insbesondere mindestens 1000 N. Dadurch wird der Hauptanteil der Gewichtskraft durch die Gewichtkompensationsvorrichtung und nicht durch die Antriebsvorrichtung aufgenommen.

Vorteilhaft beträgt die von der Gewichtkompensationsvorrichtung zum Halten des Haltemittels gemeinsam mit der Last aufbringbare Kraft maximal 10000 N, insbesondere maximal 3000 N, insbesondere maximal 1600 N.

Insbesondere liegt die von der Gewichtkompensationsvorrichtung aufbringbare Kraft in einem Bereich von 100 N bis 10000 N, insbesondere von 100 N bis 3000 N, insbesondere von 300 N bis 3000 N, insbesondere von 300 N bis 1600 N.

Zweckmäßig umfasst die Gewichtkompensationsvorrichtung einen Motor. Insbesondere ist die Gewichtkompensationsvorrichtung ein Motor Vorteilhaft umfasst die Gewichtkompensationsvorrichtung einen pneumatischen und/oder einen hydraulischen Zylinder und/oder einen elektrischen Antrieb. Dadurch kann die Gewichtkompensationsvorrichtung auf einfache Weise an die von ihr aufzunehmende Gewichtskraft angepasst werden. Dadurch können verschieden schwere Lasten mit dem Arbeitsgerät gehalten und bewegt werden. Außerdem ist auch in verschiedenen Stellungen und Positionen der Last eine Anpassung der Gewichtkompensationsvorrichtung an die durch die Lageänderung der Last variierende Kraftübertragung von der Last auf das Arbeitsgerät möglich.

Zweckmäßig ist das Haltemittel gegenüber dem Grundkörper gemeinsam mit der Last in Gewichtskraftrichtung der Last und/oder in zumindest einer Positionierrichtung bewegbar. Die Positionierrichtung verläuft in einer Ebene quer, insbesondere senkrecht zur Gewichtskraftrichtung. Insbesondere ist die Antriebsvorrichtung zum Bewegen des Haltemittels zusammen mit der Last in Positionierrichtung und/oder in Gewichtskraftrichtung ausgelegt. Zweckmäßig umfasst die Antriebsvorrichtung zumindest einen Positionierantrieb zum Bewegen des Haltemittels in Positionierrichtung und/oder zumindest einen Höhenantrieb zum Bewegen des Haltemittels zusammen mit der Last in Gewichtskraftrichtung. Dadurch kann das Haltemittel zusammen mit der Last in alle drei Raumrichtungen bewegt werden. Es kann auch vorgesehen sein, dass die Antriebsvorrichtung zumindest einen, insbesondere drei Drehantriebe zur Drehung um Drehachsen umfasst. Insbesondere ist der Positionierantrieb und/oder der Höhenantrieb und/oder der Drehantrieb ein Elektromotor, insbesondere ein Servomotor. Dadurch ist der Positionierantrieb und/oder der Drehantrieb und/oder der Höhenantrieb auf besonders einfache Weise ansteuerbar. Insbesondere der Höhenantrieb ist ein zweiter Aktor. Auch der Drehantrieb und/oder der Positionierantrieb sind zweckmäßig jeweils ein zweiter Aktor.

In vorteilhafter Ausführung der Erfindung umfasst das Arbeitsgerät einen Wegaufnehmer. Der Wegaufnehmer detektiert die Position des Haltemittels, insbesondere der Last zumindest mittelbar, insbesondere unmittelbar. Zweckmäßig wird die detektierte Position als Positionswert an die Steuereinheit übermittelt. Vorteilhaft regelt das Arbeitsgerät, insbesondere die Steuereinheit, die Kraftaufbringung der Gewichtkompensationsvorrichtung in Abhängigkeit des Positionswerts. Das Arbeitsgerät kann so ausgelegt sein, dass die Gewichtkompensationsvorrichtung zur Aufnahme des gleichen Kraftanteils der Gewichtskraft der Last in Abhängigkeit der Position der Last verschieden große Kräfte aufbringen muss.

Zweckmäßig umfasst das Arbeitsgerät eine Gewichtskraftmesseinrichtung. Die Gewichtskraftmesseinrichtung dient zur zumindest mittelbaren Bestimmung der Gewichtskraft der Last. Insbesondere wird der Wert der Gewichtskraft der Steuereinheit zugeführt.

Zweckmäßig ist die Kraftaufbringung der Gewichtkompensationsvorrichtung so eingestellt, dass mindestens 80%, insbesondere mindestens 90%, insbesondere mindestens 95%, insbesondere mindestens 98%, vorteilhaft mindestens 99% der Gewichtskraft der Last, insbesondere der Last und des Arbeitsgeräts, von der Balanceeinheit, insbesondere von der Gewichtkompensationsvorrichtung aufgenommen wird. Es kann auch vorgesehen sein, dass die Kraftaufbringung der Gewichtkompensationsvorrichtung so eingestellt ist, dass 100% der Gewichtskraft der Last, insbesondere der Last und des Arbeitsgeräts, von der Balanceeinheit, insbesondere von der Gewichtkompensationsvorrichtung aufgenommen wird. Insbesondere wird die Kraftaufbringung der Gewichtkompensationsvorrichtung in Abhängigkeit der Gewichtskraft der Last geregelt. Dies geschieht insbesondere durch die Steuereinheit. Dadurch muss die Antriebsvorrichtung zur Positionierung des Haltemittels zusammen mit der Last kaum oder gar keine Gewichtskraft der Last aufnehmen. Dadurch kann die Antriebsvorrichtung mit kleinen präzisen Antrieben arbeiten. Durch die kleinen, leistungsärmeren Antriebe der Antriebsvorrichtung ist eine sichere Positionierung durch das Arbeitsgerät ermöglicht. Die Gewichtkompensationsvorrichtung muss nicht an einer Bewegung des Haltemittels und/oder der Last teilnehmen und ist dadurch weniger fehleranfällig.

In vorteilhafter Weiterbildung der Erfindung ist das Arbeitsgerät so ausgelegt, dass das Haltemittel wahlweise von einem Werker manuell positionierbar ist oder zumindest abschnittsweise, insbesondere vollständig, automatisch mittels der Antriebsvorrichtung bewegbar ist. Insbesondere weist das Arbeitsgerät einen ersten Betriebsmodus und einen zweiten Betriebsmodus auf.

In dem ersten Betriebsmodus des Arbeitsgeräts ist das Haltemittel zusammen mit der Last zumindest abschnittsweise ohne Unterstützung durch die Kraft des Werkers mittels der Antriebsvorrichtung automatisch bewegbar. Insbesondere kann hierbei die Antriebsvorrichtung von der Steuereinheit angesteuert werden. Während der Bewegung durch die Antriebsvorrichtung nimmt die Gewichtkompensationsvorrichtung zumindest einen Teil der Gewichtskraft der Last auf. Der erste Betriebsmodus entspricht der vorstehend beschriebenen automatischen Bewegung des Haltemittels zusammen mit der Last mittels der Antriebsvorrichtung bei gleichzeitiger Aufnahme zumindest eines Teils der Gewichtskraft der Last durch die Gewichtkompensationsvorrichtung.

In dem zweiten Betriebsmodus ist das Haltemittel zusammen mit der Last von einem Werker manuell positionierbar. Bei der manuellen Positionierung des Haltemittels zusammen mit der Last nimmt die Gewichtkompensationsvorrichtung zumindest einen Teil der Gewichtskraft der externen Last auf. Dadurch kann der Werker auch große Lasten manuell mit geringem Kraftaufwand positionieren.

Dadurch, dass das Haltemittel zusammen mit der Last wahlweise von einem Werker manuell positionierbar ist oder zumindest abschnittsweise automatisch mittels der Antriebsvorrichtung bewegbar ist, können bei der manuellen Positionierung die Vorteile menschlicher Sensorik ausgenutzt werden. Der Werker kann jederzeit in den Prozess eingreifen und eine manuelle Korrektur vornehmen. Gleichzeitig ist es aber auch möglich, dass das Arbeitsgerät die Last automatisch bewegt. Dies ist beispielsweise von Vorteil, wenn das Bewegen des Haltemittels wiederkehrend als Zuführung der Last im Prozess ablaufen soll oder die Arbeitskraft des Werkers an anderer Stelle benötigt wird.

Vorteilhaft ist die Antriebsvorrichtung bei manueller Positionierung durch einen Werker aufgrund der vom Werker bewirkten Kraft über einen Freilauf so vom Haltemittel getrennt, dass keine Kraftübertragung zwischen Antriebsvorrichtung und Haltemittel stattfindet. Insbesondere kann sich eine Motorwelle der Antriebsvorrichtung bei der manuellen Positionierung durch den Werker aufgrund der vom Werker bewirkten Kraft aufgrund des Freilaufs frei drehen. Der Freilauf ermöglicht die manuelle Positionierung durch den Werker. Dadurch kann das Arbeitsgerät wahlweise im ersten Betriebsmodus oder im zweiten Betriebsmodus betrieben werden.

Insbesondere detektiert der Wegaufnehmer die Position des Haltemittels, insbesondere der Last bei manueller Positionierung durch den Werker und übermittelt sie als Positionswerte an die Steuereinheit. Zweckmäßig verknüpft die Steuereinheit die Positionswerte mit Zeitwerten. Dadurch kann die manuelle Positionierung genutzt werden, um das Arbeitsgerät für einen automatischen Betrieb anzulernen. In vorteilhafter Weiterbildung der Erfindung ist die Steuereinheit so ausgelegt, dass sie die detektierten Positionswerte, und insbesondere die damit verknüpften Zeitwerte, und insbesondere den Wert der Gewichtskraft der Last nutzt, um selbständig zu ermitteln, wie die Antriebsvorrichtung bei zumindest abschnittsweiser automatischer Bewegung des Haltemittels anzusteuern ist. Insbesondere werden der Steuereinheit, während der Werker das Haltemittel mit der Last mehrfach manuell von einer Startposition zu einer Endposition führt, Positionswerte, und insbesondere Zeitwerte, und insbesondere Werte für die Gewichtskraft, zugeführt. Zweckmäßig ermittelt die Steuereinheit hieraus, wie die Antriebsvorrichtung bei zumindest abschnittsweiser automatischer Bewegung des Haltemittels anzusteuern ist, um die Last mittels des Haltemittels von der Startposition zu der Endposition zu bewegen, insbesondere, um die Last mittels des Haltemittels in der Endposition zu positionieren.

In vorteilhafter Ausführung der Erfindung umfasst die Gewichtkompensationsvorrichtung einen Zylinder mit einer Kolbenstange und einem Zylindergehäuse. Die Kolbenstange ist in dem Zylindergehäuse in einer Auszugsrichtung verschiebbar. Zweckmäßig ist die Gewichtkompensationsvorrichtung, insbesondere das Zylindergehäuse, an einer Schiene des Arbeitsgeräts derart längsverschiebbar gelagert, dass sich die Auszugsrichtung immer parallel zur Richtung der Gewichtskraft der Last einstellt. Insbesondere ist das Haltemittel an einem Schwenkarm schwenkbar gelagert. Der Schwenkarm ist um eine Schwenkachse schwenkbar. Die Schwenkachse teilt den Schwenkarm in einen Lastteil und in einen Antriebsteil. Das Haltemittel ist dem Lastteil zugeordnet. Das Haltemittel ist zweckmäßig zumindest mittelbar am Schwenkarm gehalten. Die Gewichtkompensationsvorrichtung greift im Antriebsteil des Schwenkarms am Schwenkarm an. Bevorzugt verläuft die Schwenkachse horizontal. Dadurch, dass die Gewichtkompensationsvorrichtung, insbesondere das Zylindergehäuse an der Schiene des Arbeitsgeräts derart längsverschiebbar gelagert ist, dass sich die Auszugsrichtung immer parallel zur Richtung der Gewichtskraft der Last einstellt, ist das von der Gewichtkompensationsvorrichtung am Schwenkarm erzeugte Drehmoment bei gleichbleibender, von der Gewichtkompensationsvorrichtung aufgebrachter Kraft immer gleich groß. Bei gleichbleibender Last muss die von der Gewichtkompensationsvorrichtung aufzubringende Kraft nicht an die verschiedenen Positionen des Haltemittels, insbesondere der Last, angepasst werden. Die von der Gewichtkompensationsvorrichtung aufzubringende Kraft muss nur einmal an die Last angepasst werden und nimmt dann immer denselben Anteil der Gewichtskraft der Last auf.

Das erfindungsgemäße Verfahren zum Betrieb eines Arbeitsgeräts zum Halten und Bewegen einer externen Last sieht vor, dass das Arbeitsgerät eine Gewichtkompensationsvorrichtung umfasst, deren Kraftaufbringung anpassbar ist. Insbesondere ist die Kraftaufbringung der Gewichtkompensationsvorrichtung mittels der Steuereinheit anpassbar. Die Antriebsvorrichtung wird so von der Steuereinheit angesteuert, dass das Haltemittel zusammen mit der Last durch die Antriebsvorrichtung automatisch bewegt, insbesondere positioniert wird. Während des automatischen Bewegens des Haltemittels zusammen mit der Last wird zumindest ein Teil der Gewichtskraft der externen Last durch die Gewichtkompensationsvorrichtung aufgenommen. Insbesondere wird die Kraftaufbringung der Gewichtkompensationsvorrichtung so eingestellt, dass mindestens 95%, insbesondere mindestens 99% der Gewichtskraft der Last, insbesondere der Last und des Arbeitsgeräts von der Balanceeinheit, insbesondere von der Gewichtkompensationsvorrichtung kompensiert werden. Dadurch ist das Arbeitsgerät ausbalanciert und für eine Bewegung des Haltemittels zusammen mit der Last ist nur eine geringe Kraft erforderlich. Diese kann von der Antriebsvorrichtung aufgebracht werden.

Die vorstehend beschriebenen Eigenschaften des erfindungsgemäßen Arbeitsgeräts sind auch Weiterbildungen des erfindungsgemäßen Verfahrens.

Ein Ausführungsbeispiel der Erfindung ist nachfolgend anhand der Zeichnung näher beschrieben. Es zeigen:
- Fig. 1: eine schematische Seitenansicht eines Arbeitsgeräts zum Heben und Bewegen einer externen Last,
- Fig. 2: eine schematische vergrößerte Detaildarstellung der Anordnung aus Fig. 1, und
- Fig. 3: eine schematische Skizze des Arbeitsgeräts zum Heben und Bewegen einer externen Last aus Fig. 1.

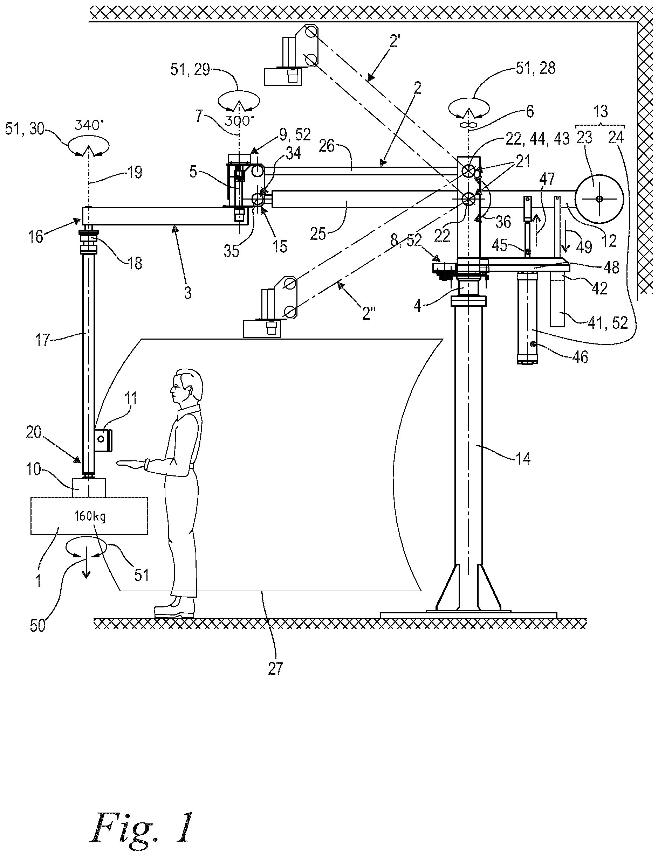

Fig. 1 zeigt ein Arbeitsgerät zum Heben und Bewegen einer externen Last 1. Das Arbeitsgerät umfasst einen Grundkörper 14. Der Grundkörper 14 ist ortsfest im Raum angeordnet. Der Grundkörper 14 ist fest auf dem Boden verankert. Der Grundkörper 14 ist im Ausführungsbeispiel als Tragsäule ausgebildet. Der Grundkörper 14 hat im Ausführungsbeispiel eine längliche Form und erstreckt sich in Gewichtskraftrichtung 50.

Das Arbeitsgerät umfasst ein Haltemittel 10. Das Haltemittel 10 dient zum Halten der Last 1. Mittels des Haltemittels 10 kann die Last 1 aufgenommen und bewegt werden. Das Haltemittel 10 ist zum Greifen bzw. Halten der Last 1 vorgesehen. Darüber hinaus kann das Haltemittel 10 zusätzliche Funktionen wie Kippen, Schwenken oder dergleichen an der Last 1 ausüben. Das Haltemittel 10 ist zumindest mittelbar mechanisch mit dem Grundkörper 14 verbunden. Im Ausführungsbeispiel ist das Haltemittel 10 über Arme 2, 3 mit dem Grundkörper 14 verbunden. Zwischen den Armen 2, 3 und dem Haltemittel 10 ist insbesondere ein vertikaler Schwenkarm 17 angeordnet. Der vertikale Schwenkarm 17 verbindet das Haltemittel 10 unmittelbar mit den Armen 2, 3. Es kann aber auch vorgesehen sein, dass das Haltemittel über einen Seilzug oder ähnliches mit dem Grundkörper verbunden ist. Das Haltemittel 10 ist relativ zu dem Grundkörper 14 bewegbar.

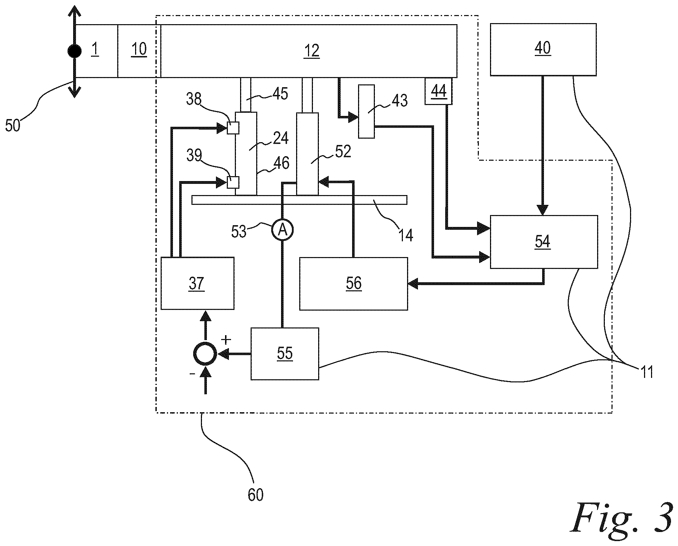

Zur Bewegung des Haltemittels 10 zusammen mit der Last 1 weist das Arbeitsgerät mindestens eine Antriebsvorrichtung 52 auf. In Fig. 3 ist die Antriebsvorrichtung 52 schematisch dargestellt. In Fig. 1 umfasst die Antriebsvorrichtung 52 mehrere Antriebe. Die Positionierantriebe 8 und 9 dienen zur Positionierung des Haltemittels 10 zusammen mit der Last 1 bezüglich einer Richtung senkrecht zur Gewichtskraftrichtung 50. Der Höhenantrieb 41 dient zu einer Positionierung des Haltemittels 10 zusammen mit der Last 1 in Gewichtskraftrichtung 50. Die Antriebsvorrichtung 52 umfasst im Ausführungsbeispiel die Positionierantriebe 8 und 9 und den Höhenantrieb 41.

Im gezeigten Ausführungsbeispiel ist im Bereich beider Schwenkgelenke 4, 5 je ein Positionierantrieb 8, 9 für eine Verschwenkung des jeweiligen Arms 2, 3 um die jeweils zugeordnete Schwenkachse 6, 7 angeordnet.

Das Arbeitsgerät umfasst eine Steuereinheit 11. Die Steuereinheit 11 dient zumindest zur Steuerung der Antriebsvorrichtung 52. Das Haltemittel 10 ist zusammen mit der Last 1 von der Steuereinheit 11 mittels der Antriebsvorrichtung 52 zumindest abschnittsweise automatisch bewegbar. Automatisch bedeutet in diesem Zusammenhang, dass der Bediener die Steuereinheit 11 während der Bewegung nicht betätigen muss. Insbesondere muss der Bediener zur Bewegung des Haltemittels 10 und/oder der Last 1 keine Körperkraft aufbringen. Die Positionierung des Haltemittels 10 und/oder der Last 1 erfolgt insbesondere ausschließlich durch die Steuereinheit 11 und die Antriebsvorrichtung 52. Die Steuereinheit 11 steuert die Antriebsvorrichtung 52 so, dass das Haltemittel 10 zusammen mit der Last 1 automatisch von einer ersten Position zu einer zweiten Position bewegt wird. Insbesondere ist das Haltemittel 10 auf diese Weise vollautomatisch von einer Startposition des Haltemittels 10 zusammen mit der Last 1 in eine Endposition des Haltemittels 10 bewegbar, insbesondere positionierbar.

Das Arbeitsgerät umfasst eine Gewichtkompensationsvorrichtung 24. Die Gewichtkompensationsvorrichtung 24 dient zur Aufnahme zumindest eines Teils der Gewichtskraft 21 der externen Last 1. Insbesondere dient die Gewichtkompensationsvorrichtung 24 zur Aufnahme mindestens eines Teils der Gewichtskraft 21 der externen Last 1 während der automatischen Bewegung der Last 1 mittels der Antriebsvorrichtung 52. Die Gewichtkompensationsvorrichtung 24 ist getrennt von der Antriebsvorrichtung 52 ausgebildet. Bei den Bauteilen der Antriebsvorrichtung 52 handelt es sich um Bauteile, die separat von den Bauteilen der Gewichtkompensationsvorrichtung 24 ausgebildet sind. Die Kraftaufbringung der Gewichtkompensationsvorrichtung 24 ist anpassbar. Insbesondere ist die Kraftaufbringung der Gewichtkompensationsvorrichtung 24 mittels der Steuereinheit 11 anpassbar. Insbesondere ist die Kraftaufbringung der Gewichtkompensationsvorrichtung 24 durch einen motorischen Antrieb anpassbar.

Im Ausführungsbeispiel umfasst das Arbeitsgerät ein Gegengewicht 23. Das Gegengewicht 23 kompensiert zumindest einen Teil der Gewichtskraft der Last 1, insbesondere des Arbeitsgeräts und der Last 1. Das Gegengewicht 23 ist im Ausführungsbeispiel Bestandteil einer Balanceeinheit 13. Die Balanceeinheit 13 umfasst die Gewichtkompensationsvorrichtung 24.

Die Balanceeinheit 13, insbesondere die Gewichtkompensationsvorrichtung 24, nimmt mindestens 90%, insbesondere mindestens 95%, insbesondere mindestens 98%, im Ausführungsbeispiel mindestens 99% der Gewichtskraft der Last 1 auf. Die Balanceeinheit 13, insbesondere die Gewichtkompensationsvorrichtung 24, nimmt insbesondere mindestens 90%, insbesondere mindestens 95%, insbesondere mindestens 98%, im Ausführungsbeispiel mindestens 99% der Gewichtskraft der Last 1 und des Arbeitsgeräts auf. Es kann auch vorgesehen sein, dass die Balanceeinheit 13, insbesondere die Gewichtkompensationsvorrichtung 24 100% der Gewichtskraft der Last 1, insbesondere der Gewichtskraft der Last 1 und des Arbeitsgeräts, aufnimmt. Mit der Gewichtskraft des Arbeitsgeräts ist in diesem Fall die auf die in Gewichtskraftrichtung 50 relativ zum Grundkörper 14 beweglichen Bauteile des Arbeitsgeräts ein Drehmoment ausübende, in Gewichtskraftrichtung 50 wirkende Kraft bezeichnet. Die Summe aus Gewichtskraft des Arbeitsgeräts und Gewichtskraft der Last 1 kann zu den angegebenen Anteilen von der Gewichtskraftkompensationsvorrichtung 24 kompensiert werden.

Die Gewichtkompensationsvorrichtung 24 ist so ausgelegt, dass sie die Gewichtskraft einer externen Last 1 mit einem Gewicht von mindestens 10 kg, insbesondere von mindestens 30 kg, insbesondere von mindestens 100 kg, im Ausführungsbeispiel von mindestens 150 kg aufnehmen kann. Die Gewichtkompensationsvorrichtung 24 ist so ausgelegt, dass sie die Gewichtskraft einer externen Last 1 und des Arbeitsgeräts entsprechend einem Gewicht von mindestens 10 kg, insbesondere von mindestens 30 kg, insbesondere von mindestens 100 kg, im Ausführungsbeispiel von mindestens 150 kg aufnehmen kann. Die Gewichtkompensationsvorrichtung 24 ist so ausgelegt, dass sie eine Kraft von mindestens 100 N, insbesondere von mindestens 300 N, insbesondere von mindestens 1000 N, im Ausführungsbeispiel von mindestens 1500 N aufnehmen kann.

Die Gewichtkompensationsvorrichtung 24 kann im Ausführungsbeispiel ausschließlich eine Bewegung des Haltemittels 10 in Gewichtskraftrichtung 50 oder entgegen der Gewichtskraftrichtung 50 bewirken. Im Betrieb des Arbeitsgeräts ist die Gewichtkompensationsvorrichtung 24 aber nicht zur Bewegung des Haltemittels 10 und/oder der Last 1 vorgesehen, sondern lediglich um das Gewicht der Last 1 weitestgehend zu kompensieren. Die Bewegung des Haltemittels 10 und/oder der Last 1 erfolgt im Betrieb des Arbeitsgerätes in erster Linie, insbesondere ausschließlich, mittels der Antriebsvorrichtung 52. Insbesondere erfolgt die Bewegung des Haltemittels 10 und/oder der Last 1 im Betrieb des Arbeitsgerätes in erster Linie nicht durch die Gewichtkompensationsvorrichtung 24.

Wie in Fig. 1 dargestellt, greift die Gewichtkompensationsvorrichtung 24 an einem Bauelement 12 des Arbeitsgeräts unmittelbar an. Im Ausführungsbeispiel handelt es sich bei dem Bauelement 12 um den Arm 2. Es kann aber auch vorgesehen sein, dass es sich bei dem Bauelement 12 um das Seil eines Seilzugs oder ein ähnliches Bauelement handelt. Das Bauelement 12 ist einteilig ausgebildet. Zumindest ein Teil der Antriebsvorrichtung 52 greift ebenfalls unmittelbar an genau demselben Bauelement 12 wie die Gewichtkompensationsvorrichtung 24 an. Eine Bewegung des Haltemittels 10 in Gewichtskraftrichtung 50 oder entgegen der Gewichtskraftrichtung 50 ist im lastfreien Betrieb sowohl allein durch die Gewichtkompensationsvorrichtung 24 als auch allein durch die Antriebsvorrichtung 52 möglich.

Der erste Arm 2 ist mittels eines horizontalen Schwenkgelenks 21 ortsfest an dem Grundkörper 14 gelagert. Das horizontale Schwenkgelenk 21 besitzt eine horizontale Schwenkachse 22. Der erste Arm 2 ist um die horizontale Schwenkachse 22 verschwenkbar. Das horizontale Schwenkgelenk 22 unterteilt den ersten Arm 2 in einen der Last 1 zugewandten Teil und in einen der Last 1 abgewandten Teil. Die Gewichtkompensationsvorrichtung 24 wirkt in Richtung einer Schwenkbewegung um die horizontale Schwenkachse 22. Auch ein Teil der Antriebsvorrichtung 52 wirkt in Richtung einer Schwenkbewegung um die horizontale Schwenkachse 22. Im Ausführungsbeispiel wirkt der Höhenantrieb 41 der Antriebsvorrichtung 52 in Richtung der Schwenkbewegung um die horizontale Schwenkachse 22. Im Ausführungsbeispiel sind sowohl der Höhenantrieb 41 der Antriebsvorrichtung 52 als auch die Gewichtkompensationsvorrichtung 24 in dem Teil des ersten Arms 2 angeordnet, der der Last 1 abgewandt ist.

Die Gewichtkompensationsvorrichtung 24 umfasst einen Antrieb. Im Ausführungsbeispiel besteht die Gewichtkompensationsvorrichtung 24 aus einem einzigen Antrieb. Die Gewichtkompensationsvorrichtung 24 umfasst einen Motor und ist im Ausführungsbeispiel ein Motor. Im Ausführungsbeispiel ist die Gewichtkompensationsvorrichtung 24 ein pneumatischer Antrieb. Die Gewichtkompensationsvorrichtung 24 umfasst einen pneumatischen Zylinder. Es kann aber auch vorgesehen sein, dass die Gewichtkompensationsvorrichtung 24 ein hydraulischer Antrieb ist. In diesem Fall umfasst die Gewichtkompensationsvorrichtung 24 einen hydraulischen Zylinder. Es kann alternativ vorgesehen sein, dass die Gewichtkompensationsvorrichtung 24 ein elektrischer Antrieb, insbesondere ein Elektromotor ist. Ebenfalls kann vorgesehen sein, dass die Gewichtkompensationsvorrichtung 24 einen pneumatischen und/oder einen hydraulischen Zylinder und/oder einen elektrischen Antrieb umfasst.

Das Haltemittel 10 ist ohne Unterstützung durch die Kraft eines Werkers zumindest abschnittsweise automatisch mittels der Antriebsvorrichtung 52 bewegbar. Das Haltemittel 10 ist von der Steuereinheit 11 mittels der Antriebsvorrichtung 52 in eine Endposition des Haltemittels 10 positionierbar. Im Ausführungsbeispiel ist das Haltemittel 10 von der Steuereinheit 11 mittels der Antriebsvorrichtung 52 vollautomatisch von einer Startposition des Haltemittels 10 in eine Endposition des Haltemittels 10 bewegbar, insbesondere positionierbar. Das Arbeitsgerät ist so ausgelegt, dass das Haltemittel 10 ohne Unterstützung durch die die Kraft des Werkers die Last 1 vollautomatisch an eine von der Steuereinheit 11 vorgegebene Position bewegt. Insbesondere erfolgt die Positionierung des Haltemittels 10 ausschließlich durch die Steuereinheit 11 und die Antriebsvorrichtung 52.

Die von der Antriebsvorrichtung 52 zum Bewegen des Haltemittels 10 und/oder der Last 1 aufbringbare Kraft beträgt maximal 80 N, insbesondere maximal 700 N, insbesondere maximal 500 N, im Ausführungsbeispiel maximal 150 N. Die von der Antriebsvorrichtung 52 zum Bewegen des Haltemittels 10 und/oder der Last 1 aufbringbare Kraft beträgt mindestens 10 N, insbesondere mindestens 20 N, im Ausführungsbeispiel mindestens 30 N. Die von der Antriebsvorrichtung 52 zum Bewegen des Haltemittels 10 und/oder der Last 1 aufbringbare Kraft beträgt maximal 60%, insbesondere maximal 40%, im Ausführungsbeispiel maximal 20% der maximal von der Gewichtkompensationsvorrichtung 24 aufbringbaren Kraft. Die von der Gewichtkompensationsvorrichtung 24 maximal aufbringbare Kraft beträgt mindestens 100 N, insbesondere mindestens 300 N, insbesondere mindestens 1000 N, im Ausführungsbeispiel mindestens 1600 N.

Das Haltemittel 10 ist zusammen mit der Last 1 gegenüber dem Grundkörper 14 in Gewichtskraftrichtung 50 der Last 1 und/oder in zumindest einer Positionierrichtung 51 bewegbar. Die Positionierrichtung 51 verläuft in einer Ebene quer, im Ausführungsbeispiel senkrecht zur Gewichtskraftrichtung 50. Die Antriebsvorrichtung 52 ist zum Bewegen des Haltemittels 10 zusammen mit der Last 1 in Positionierrichtung 51 und/oder in Gewichtskraftrichtung 50 ausgelegt. Außerdem kann zur Drehung um eine Drehachse 19 des Haltemittels 10 ein Drehantrieb vorgesehen sein. Die Drehachse 19 verläuft im Ausführungsbeispiel in Gewichtskraftrichtung 50. Die Drehachse 19 verläuft durch das Haltemittel 10. Es kann vorgesehen sein, dass der Drehantrieb Bestandteil der Antriebsvorrichtung ist. Die Positionierantriebe 8 und 9 dienen zum Bewegen des Haltemittels 10 zusammen mit der Last 1 in Positionierrichtung 51. Die Antriebsvorrichtung 52 umfasst zumindest einen Positionierantrieb 8, 9, im Ausführungsbeispiel zumindest die beiden Positionierantriebe 8 und 9. Der Höhenantrieb 41 dient zum Bewegen des Haltemittels 10 zusammen mit der Last 1 in Gewichtskraftrichtung 50 und entgegen der Gewichtskraftrichtung 50. Die Antriebsvorrichtung 52 umfasst zumindest den Höhenantrieb 41 für eine Bewegung des Haltemittels 10 zusammen mit der Last 1 in Gewichtskraftrichtung 50 und in Richtung entgegen der Gewichtskraftrichtung 50. Der Positionierantrieb 8, 9 ist ein Elektromotor, im Ausführungsbeispiel ein Servomotor. Der Höhenantrieb 41 ist ein Elektromotor, im Ausführungsbeispiel ein Servomotor. Der optional vorgesehene Drehantrieb ist ein Elektromotor, insbesondere ein Servomotor. Es können weitere Drehantriebe zur Drehung um zwei weitere Drehachsen vorgesehen sein, die dann insbesondere Elektromotoren, insbesondere Servomotoren sind.

Der Höhenantrieb 41 ist getrennt von der Gewichtkompensationsvorrichtung 24 ausgebildet. Der als Elektromotor ausgebildete Höhenantrieb 41 ist getrennt von der als pneumatischer Antrieb ausgebildeten Gewichtkompensationsvorrichtung 24 ausgebildet.

Wie in Fig. 1 dargestellt, umfasst das Arbeitsgerät zum Heben und Bewegen der externen Last 1 mehrere Arme 2, 3. Die mehreren Arme 2, 3 sind relativ zueinander bewegbar, insbesondere gegeneinander verschwenkbar. Hierdurch sind mehrere Bewegungsachsen des Arbeitsgeräts definiert.

Auch der vertikale Schwenkarm 17 ist ein Arm. Die Arme 2, 3, 17 verbinden das Haltemittel 10 mit dem Grundkörper 14 mechanisch. Zur mechanischen Verbindung zwischen dem Grundkörper 14 und dem Haltemittel 10 sind ausschließlich die Arme 2, 3, 17 vorgesehen. Ein Arm kann mehrere Bauteile umfassen. Allerdings jeweils nur Bauteile, die funktional derselben Bewegungsachse zugeordnet sind und gemeinsam in dieselbe Bewegungsrichtung bewegbar sind.

Als Bewegungsachse weist das Arbeitsgerät zumindest die Schwenkachse 22 auf, die im Ausführungsbeispiel horizontal orientiert ist. Im Ausführungsbeispiel ist eine weitere Schwenkachse 35 vorgesehen. Die Schwenkachse 35 ist insbesondere horizontal orientiert. Die Schwenkachse 35 ist einem Schwenkgelenk 34 zugeordnet. Das Schwenkgelenk 34 ist funktional zwischen dem Arm 2 und dem Arm 3 angeordnet. Das Schwenkgelenk 34 ermöglicht eine Relativbewegung, insbesondere ein Verschwenken, von Arm 2 und Arm 3 zueinander.

Zu den Bewegungsachsen zählen im Ausführungsbeispiel außerdem eine vertikale Schwenkachse 6, eine vertikale Schwenkachse 7 und die Drehachse 19.

Der erste Arm 2 ist mittels eines zugeordneten Schwenkgelenkes 4 ortsfest gelagert. Insbesondere ist der Arm 2 mittels des vertikalen Schwenkgelenks 4 an der Tragsäule 14 gelagert. Das Schwenkgelenk 4 weist die vertikale, ebenfalls in Gewichtskraftrichtung ausgerichtete Schwenkachse 6 auf, um die der erste Arm 2 entsprechend einem Doppelpfeil 28 schwenkbar ist. Hierbei ist keine Schwenkwinkelbegrenzung vorgesehen, so dass die Last 1 in eine beliebige räumliche Position um die Tragsäule 14 herum verbracht werden kann. Es kann aber auch eine Schwenkwinkelbegrenzung zweckmäßig sein. Der zweite Arm 3 ist mittels eines zugeordneten Schwenkgelenks 5 an einem freien Ende 15 des ersten Manipulatorsarms 2 gelagert. Das zweite Schwenkgelenk 5 weist die vertikale, in Gewichtskraftrichtung 50 ausgerichtete Schwenkachse 7 auf. Der zweite Arm 3 ist ein Schwenkarm, der relativ zum ersten Arm 2 um das Schwenkgelenk 5 entsprechend einem Doppelpfeil 29 schwenkbar ist, wobei hier im Ausführungsbeispiel eine Drehwinkelbegrenzung auf insgesamt 300° Schwenkwinkel vorgesehen ist. Auf eine Drehwinkelbegrenzung kann aber auch verzichtet werden. Der zweite Arm 3 wird auch als horizontaler Schwenkarm bezeichnet.

Gegenüberliegend zum Schwenkgelenk 5 ist an einem freien Ende 16 des zweiten Arms 3 ein weiteres Schwenkgelenk 18 mit der vertikalen Drehachse 19 angeordnet. Der vertikaler Schwenkarm 17 ist mittels des Drehgelenks 19 an dem zweiten Arm 3 befestigt. Im weiteren Schwenkgelenk 18 ist eine Drehwinkelbegrenzung auf insgesamt 340° vorgesehen, um die der vertikale Schwenkarm 17 entsprechend einem Doppelpfeil 30 verschwenkt werden kann. Auch hier kann auf eine Drehwinkelbegrenzung verzichtet werden. Gegenüberliegend zum Drehgelenk 18 weist der vertikale Schwenkarm 17 ein freies Ende 20 auf, an dem das schematisch angedeutete Haltemittel 10 für die ebenfalls schematisch angedeutete Last 1 angeordnet ist. Das Drehgelenk 18 kann auch zwischen dem vertikalen Schwenkarm 17 und den Haltemitteln 10 angeordnet sein.

Die Positionierrichtung 51, die in einer Ebene quer, im Ausführungsbeispiel senkrecht zur Gewichtskraftrichtung 50 verläuft, kann sich im Ausführungsbeispiel durch ein Schwenkbewegung entlang des Doppelpfeils 28 und/oder entlang des Doppelpfeils 29 und/oder entlang des Doppelpfeils 30 ergeben. Die Bewegung in Positionierrichtung 51 kann eine Überlagerung mehrerer Schwenkbewegungen sein.

Der erste Arm 2 ist der horizontalen Schwenkachse 22 zugeordnet und um diese verschwenkbar. Der erste Arm 2 ist der vertikalen Schwenkachse 6 zugeordnet und um diese verschwenkbar.

Mindestens einer der Arme 2, 3, 17 ist mit zwei getrennten Aktoren ausgestattet. Einer der Aktoren dient zur Kompensation der Gewichtskraft der Last 1 und der andere der Aktoren dient dazu, die Last zu bewegen. Es kann auch vorgesehen sein, dass mehrere Arme 2, 3, 17 jeweils mit zwei getrennt voneinander ausgebildeten Aktoren ausgestattet sind, von denen einer zur Kompensation der Gewichtskraft der Last 1, insbesondere der Last 1 und des Arbeitsgeräts, dient und der andere dazu dient, die Last 1, insbesondere die Last 1 und das Arbeitsgeräts zusammen mit dem Haltemittel 10, zu bewegen. Dieses Grundprinzip der vorliegenden Erfindung ist losgelöst vom konkreten Ausführungsbeispiel zu sehen. Grundsätzlich kann jeder Arm 2, 3, 17 einen Aktor zur Aufnahme der Gewichtskraft der Last 1 und einen weiteren Aktor zur Bewegung des Haltemittels 10 zusammen mit der Last 1 aufweisen.

Der erste Aktor und der zweite Aktor sind funktional derselben Bewegungsachse zugeordnet. Im Ausführungsbeispiel ist der erste Aktor durch die auf den ersten Arm 2 wirkende Gewichtkompensationsvorrichtung 24 gebildet. Mittels des ersten Aktors ist eine motorisch angetriebene Bewegung des ersten Arms 2 um die horizontale Schwenkachse 21 möglich. Der erste Aktor wird dazu benutzt, das Arbeitsgerät, insbesondere das Arbeitsgerät zusammen mit der Last 1 auszubalancieren. Eine tatsächliche Bewegung durch den ersten Aktor ist nicht vorgesehen. Der erste Aktor nimmt zumindest einen Teil der Gewichtskraft der Last 1, insbesondere der Last 1 und des Arbeitsgeräts 1, auf. Insbesondere werden durch den ersten Aktor und das Gegengewicht 23 im Ausführungsbeispiel 99% der Gewichtskraft der Last 1, insbesondere der Last 1 und des Arbeitsgeräts, kompensiert. Der erste Aktor wirkt so auf den ersten Arm 2, dass das resultierende Drehmoment auf den ersten Arm 2 bezüglich der horizontalen Schwenkachse 22 möglichst klein ist. Insbesondere ist das resultierende Drehmoment kleiner als 4600 Nm, insbesondere kleiner als 1000 Nm, insbesondere kleiner als 500 Nm, insbesondere kleiner als 100 Nm, im Ausführungsbeispiel kleiner als 50 Nm. Im Ausführungsbeipiel wird dies durch einen einzigen Antrieb der Gewichtkompensationsvorrichtung 24, und insbesondere das Gegengewicht 23, bewirkt.

Die Gewichtkompensationsvorrichtung 24, die zur Kompensation zumindest eines Teils der Gewichtskraft der Last 1, insbesondere der Last 1 und des Arbeitsgeräts, dient, greift am ersten Arm 2 an. Im Ausführungsbeispiel ist vorgesehen, dass die Gewichtkompensationsvorrichtung 24 zusammen mit dem Gegengewicht 23 mindestens 99% der Gewichtskraft der Last 1, insbesondere der Last 1 und des Arbeitsgeräts, kompensiert. Allein aufgrund der Gewichtkompensationsvorrichtung 24 befindet sich die Last 1 nahezu in einer Art Schwebezustand.

Die Arme 2, 3, 17 werden auch als Bauelemente 2, 3, 17 bezeichnet. Der Grundkörper 14 ist mittels zumindest eines Bauelements 2, 3, 17 mit dem Haltemittel 10 zum Heben und Bewegen des Haltemittels 10 zusammen mit der Last 1 mechanisch verbunden. Eine Bewegung des Haltemittels 10 zusammen mit der Last 1 kann durch die Bewegung des zumindest einen Bauelements 2 relativ zum Grund¬körper 14 in eine Bewegungsrichtung bewirkt werden.

Die Gewichtkompensationsvorrichtung 24 umfasst den mindestens einen ersten Aktor. Die Antriebsvorrichtung 52 umfasst mindestens einen zweiten Aktor 41. Im Ausführungsbeispiel ist der Höhenantrieb 41 ein zweiter Aktor. Der zweite Aktor wird deshalb ebenfalls mit dem Bezugszeichen 41 bezeichnet. Im Ausführungsbeispiel ist die Gewichtkompensationsvorrichtung 24, die aus einem Antrieb besteht, ein erster Aktor. Deshalb wird der erste Aktor ebenfalls mit dem Bezugszeichen 24 bezeichnet.

Sowohl der erste Aktor 24 als auch der zweite Aktor 41 wirken unmittelbar auf das zumindest eine Bauelement 2 ein. Insbesondere sind sowohl der erste Aktor 24 als auch der zweite Aktor 41 beide an dem zumindest einen Bauelement 2 unmittelbar gelagert.

Sowohl der erste Aktor 24 als auch der zweite Aktor 41 sind zumindest mittelbar an dem Grundkörper 14 gelagert, insbesondere zumindest mittelbar mechanisch mit dem Grundkörper 14 verbunden.

Sowohl der erste Aktor 24 alleine als auch der zweite Aktor 41 alleine können derart auf das zumindest eine Bauelement 2 einwirken, dass auf das zumindest eine Bauelement 2 durch den ersten Aktor 24 alleine oder durch den zweiten Aktor 41 alleine eine Kraft auf das Bauelement 2 in dieselbe Bewegungsrichtung wirkt. Im Ausführungsbeispiel ist die Bewegungsrichtung die Umfangsrichtung 36, die um die horizontale Schwenkachse 22 herum verläuft und in Fig. 1 mit einem Doppelpfeil eingezeichnet ist. Im Ausführungsbeispiel können sowohl der erste Aktor 24 alleine als auch der zweite Aktor 41 alleine eine Schwenkbewegung des Bauelements 2 um die horizontale Schwenkachse 35 herum bewirken.

Sowohl der erste Aktor 24 alleine als auch der zweite Aktor 41 alleine können derart auf das zumindest eine Bauelement 2 einwirken, dass auf das zumindest eine Bauelement 2 durch den ersten Aktor 24 alleine oder durch den zweiten Aktor 41 alleine eine Kraft auf das Bauelement 2 bezüglich derselben Bewegungsachse, im Ausführungsbeispiel bezüglich der horizontalen Schwenkachse 22, wirkt.

Im Ausführungsbeispiel sind zwischen dem Grundkörper 14 und dem Haltemittel 10 mehrere Bauelemente 2, 3, 17 angeordnet. Die mehreren Bauelemente 2, 3, 17 sind relativ zueinander beweglich, insbesondere über die verschiedenen Gelenke 4, 5, 18, 21, 34 gegeneinander verschwenkbar. Es kann vorgesehen sein, dass jedem Bauelement 2, 3, 17 ein erster Aktor und ein zweiter Aktor zugeordnet ist. Im Ausführungsbeispiel ist dies lediglich für das erste Bauelement 2 der Fall.

An jedem Bauelement 2, 3, 17 des Arbeitsgeräts, das gegenüber einem unmittelbar benachbarten, durch ein Gelenk verbundenen Bauelement 2, 3, 17 mittels des Gelenks in einer Ebene, die die Gewichtskraftrichtung 50 enthält, durch das Gelenk beweglich ist, ist zur Unterbindung einer solchen Bewegung des Bauelements 2, 3, 17 eine mechanische Abstützvorrichtung, die die beiden benachbarten Bauelemente 2, 3, 17 mechanisch miteinander koppelt und/oder mindestens ein erster Aktor der Gewichtkompensationsvorrichtung 24 und mindestens ein zweiter Aktor 41 der Antriebsvorrichtung 52 vorgesehen. Die mechanische Abstützvorrichtung kann beispielsweise ein Gelenk sein, dass keine Bewegung des funktional weiter vom Grundkörper 14 entfernten Bauelments 3 gegenüber dem unmittelbar benachbarten, funktional näher am Grundkörper 14 angeordneten Bauelement 2 in Gewichtskraftrichtung 50 zulässt.

Wie beschrieben, können die beiden Aktoren 24 und 41 jeweils eine Kraft auf das Bauelement 2 bewirken, die jeweils in dieselbe Bewegungsrichtung wirkt. Im Ausführungsbeispiel verläuft die Bewegungsrichtung einer Ebene, die die Gewichtskraftrichtung 50 enthält. Es kann vorgesehen sein, dass die beiden Aktoren 24 und 41 die beiden benachbarten Bauteile 2, 3, 17 zumindest mittelbar, insbesondere unmittelbar verbinden.

Im Ausführungsbeispiel umfasst der Arm 2 eine Koppel 26 und einen Hubarm 25. Der Arm 2 ist im gezeigten Ausführungsbeispiel durch ein Paar von in Gewichtskraftrichtung 50 übereinander angeordneten, vertikal verschwenkbaren Parallelogrammarmen gebildet, wobei das Schwenkgelenk 21 ein Doppelgelenk für die beiden Parallelogrammarme ist. Auch gegenüberliegend im Bereich des zweiten Schwenkgelenkes 5 ist ein solches Doppelgelenk vorgesehen. Dies erlaubt eine Höhenverstellung des Armes 2 einschließlich des Haltemittels 10, insbesondere einschließlich der Last 1 ausgehend von der zeichnerisch dargestellten Mittelstellung in eine obere, mit 2' bezeichnete und in eine untere, mit 2" bezeichnete Endlage mit beliebigen Zwischenpositionen. Im Ausführungsbeispiel ist der obere Parallelogrammarm die Koppel 26. Der untere Parallelogrammarm ist der Hubarm 25.

Aus der Kombination der horizontalen und vertikalen Verschwenkung ergibt sich eine schematisch angedeutete Einhüllende 27, innerhalb derer das freie Ende 20 des vertikalen Schwenkarms 17 bzw. das Haltemittel 10 und die Last 1 bewegt werden können, wobei die radial äußeren Schwenkachsen 7, 19 ihre vertikale Ausrichtung immer beibehalten. Die Einhüllende 27 verläuft als Rotationskörper um die Schwenkachse 6 bzw. um den Grundkörper 14 herum. Der radial innere Arm 2 übt damit eine Doppelfunktion als in der Horizontalen bewegbarer Schwenkarm und als in der Vertikalen bewegbarer Hubarm aus.

Darüber hinaus sind Momentenausgleichsmittel vorgesehen, die die Gesamtanordnung einschließlich der Last 1 um die Schwenkachsen 22 zumindest näherungsweise frei von äußeren Gewichtskraftmomenten halten. Hierzu ist der Hubarm 25 ausgehend vom freien Ende 15 über das zentrale Schwenkgelenk 21 hinausgehend geführt und trägt an seinem dem freien Ende 15 gegenüberliegenden Ende das Gegengewicht 23.

Im Ausführungsbeispiel greift auch der Antrieb der Gewichtausgleichsvorrichtung 24 auf der gleichen Seite wie das Gegengewicht 23 am Hubarm 25 des ersten Arms 2 an. Die Gewichtskraft des Gegengewichts 23 und die Haltekraft der Gewichtausgleichsvorrichtung 24 sind derart bemessen, dass sie ein Gegenmoment um die Schwenkachse 22 bilden, welches im Gleichgewicht zum Gewichtskraftmoment der Anordnung im Bereich der Arme 2, 3 und der Last 1 steht. Zum Anheben bzw. Absenken der Last 1 muss demnach nur eine geringe Kraft aufgebracht werden, die zur Überwindung der Massenträgheit und der Reibmomente in den Schwenkgelenken ausreicht. Da darüber hinaus alle Schwenkgelenke 4, 5, 18 mit ihren vertikalen Schwenkachsen 6, 7, 19 naturgemäß frei von äußeren, um die vertikalen Schwenkachsen 6, 7, 19 wirkenden Gewichtskraftmomenten sind, gilt das Genannte auch in gleicher Weise für die Kraft zur Erzeugung einer horizontalen Bewegung des Haltemittels 10, insbesondere des Haltemittels 10 zusammen mit der Last 1.

Durch die Parallelogrammarme, insbesondere durch die Koppel 26 ist sichergestellt, dass die außenseitig sich daran anschließenden Baugruppen einschließlich eines oder mehrerer weiterer Schwenkgelenke 5, 18, 34 bei einer Höhenverstellung keine Kippbewegung durchführen. Die vertikale Schwenkachse 5, 19 eines äußeren Schwenkgelenks bleibt vertikal und damit frei von äußeren Gewichtskraftmomenten.

Die Koppel 26 ist eine mechanische Abstützvorrichtung, die die beiden benachbarten Bauelemente 2, 3 mechanisch miteinander koppelt. Gleichzeitig ist die Koppel 26 Bestandteil des Bauelements 2. Durch die mechanische Abstützvorrichtung wird eine Bewegung des Bauelements 3 um die Schwenkachse 35 relativ zu dem Bauelement 2 in Gewichtskraftrichtung 50 unterbunden. Die Abstützvorrichtung bewirkt, dass das Bauelement 3 sich gegenüber dem Bauelement 2 maximal so weit in Gewichtskraftrichtung 50 bewegt, dass es gerade noch horizontal ausgerichtet ist.

Es kann aber auch vorgesehen sein, dass der Arm 2, insbesondere das Bauelement 12 monolitihisch ausgebildet ist. Insbesondere ist der Arm 2, insbesondere das Bauelement 12, aus einem einzigen, insbesondere materialeinheitlich ausgebildeten Arm gebildet.

Im Ausführungsbeispiel ist die Gewichtkompensationsvorrichtung 24 durch einen pneumatischen Antrieb gebildet. Der pneumatische Antrieb umfasst ein Zylindergehäuse 46 und eine Kolbenstange 45. Die Kolbenstange 45 ist in einer Auszugsrichtung 47 aus dem Zylindergehäuse 46 ausziehbar. Die Ausziehbewegung wird pneumatisch bewirkt. Im Ausführungsbeispiel verläuft die Auszugsrichtung 47 parallel zur Gewichtskraftrichtung 50. Dadurch kann die Gewichtkompensationsvorrichtung 24 besonders effizient die Gewichtskraft der Last 1 aufnehmen. Es kann aber auch vorgesehen sein, dass die Gewichtkompensationsvorrichtung 24 in Richtung schräg zur Gewichtskraftrichtung 50 wirkt. Außerdem kann vorgesehen sein, dass die Gewichtkompensationsvorrichtung 24 alternativ oder zusätzlich einen hydraulischen und/oder elektrischen Antrieb umfasst. Grundsätzlich kann vorgesehen sein, dass die Gewichtkompensationsvorrichtung 24 aus mehreren gleichartigen und/oder verschiedenen Antrieben besteht. Der zweite Aktor, der auf den Arm 2 wirkt, ist im Ausführungsbeispiel der Höhenantrieb 41 der Antriebsvorrichtung 52. Im Ausführungsbeispiel ist der Höhenantrieb 41 ein Elektromotor. Es kann aber auch vorgesehen sein, dass der Höhenantrieb ein pneumatischer oder hydraulischer Antrieb ist.

Sowohl der im Ausführungsbeispiel als pneumatischer Antrieb ausgebildete erste Aktor alleine als auch der im Ausführungsbeispiel als elektrischer Antrieb ausgebildete zweite Aktor 41 alleine wirken derart auf dasselbe Bauelement, im Ausführungsbeispiel auf den Arm 2, dass durch den ersten Aktor alleine oder durch den zweiten Aktor 41 alleine eine Kraft auf das Bauelement 2 wirkt, die eine Bewegung des Bauelements 2 in dieselbe Bewegungsrichtung 36 des Bauelements 2 auslösen kann. Im Ausführungsbeispiel kann die Gewichtkompensationsvorrichtung 24, insbesondere der pneumatische Antrieb der Gewichtkompensationsvorrichtung 24, eine Schwenkbewegung des Arms 2 um die horizontale Schwenkachse 22 bewirken. Tatsächlich ist dies nicht der Zweck der Gewichtkompensationsvorrichtung 24. Vielmehr soll die Gewichtkompensationsvorrichtung 24 lediglich das Gewicht der Last 1 weitestgehend kompensieren. Aber die Kraft, die die Gewichtkompensationsvorrichtung 24, insbesondere ihr pneumatischer Antrieb, auf den Arm 2 bewirkt, wirkt in Richtung einer Schwenkbewegung um die horizontale Schwenkachse 22. Die Antriebsvorrichtung 52 kann im Ausführungsbeispiel mittels des Höhenantriebs 41 so auf den Arm 2 einwirken, dass durch die Antriebsvorrichtung 52, insbesondere durch den Höhenantrieb 41, alleine eine Kraft auf den Arm 2 wirkt, die eine Schwenkbewegung des Arms 2 in dieselbe Schwenkrichtung des Arms 2 um die horizontale Schwenkachse 22 auslösen kann wie die Gewichtkompensationsvorrichtung 24, insbesondere ihr pneumatischer Antrieb.

Fig. 3 zeigt das beschriebene Prinzip der Einwirkung von zwei getrennt voneinander ausgebildeten Aktoren 24 und 52 auf ein und dasselbe Bauelement 12 des Arbeitsgeräts in schematischer Darstellung. Das Bauelement 12 ist im Ausführungsbeispiel der Arm 2, der um die Schwenkachse 22 schwenkbar ist. Das Bauelement 12 wirkt auf das Haltemittel 10, insbesondere so, dass auf das Haltemittel 10, insbesondere zusammen mit der Last 1 eine Kraft in Richtung entgegen der Gewichtskraftrichtung 50 bewirkt wird. Das Bauelement 12 kann auch zu Positionierung des Haltemittels 10, insbesondere zusammen mit der Last 1 genutzt werden.

Die Gewichtkompensation des Bauelements 12 erfolgt fast ausschließlich durch die Gewichtkompensationsvorrichtung 24. Die Gewichtkompensationsvorrichtung 24 stützt sich am Grundkörper 14 ab. Der Grundkörper 14 ist ortsfest im Raum angeordnet. Beispielsweise ist der Grundkörper 14 auf den Boden abgestellt oder mit dem Boden verschraubt. Auch die Antriebsvorrichtung 52 stützt sich am Grundkörper 14 ab. Dies kann in beiden Fällen mittelbar erfolgen.

Die Nennleistung des zweiten Aktors der Antriebsvorrichtung 52 beträgt höchstens 30%, insbesondere höchstens 20%, insbesondere höchstens 10%, insbesondere höchstens 5% der Nennleistung des ersten Aktors der Gewichtkompensationsvorrichtung 24.

Der erste Aktor der Gewichtkompensationsvorrichtung 24 und der zweite Aktor der Antriebsvorrichtung 52 sind regelungstechnisch derart miteinander verschaltet, dass sowohl im bewegten als auch im stehenden Zustand des Arbeitsgeräts der zweite Aktor der Antriebsvorrichtung 52 eine möglichst geringe Kraft aufbringen muss.

Die Steuereinheit 11 regelt die Kraftaufbringung der Gewichtkompensationsvorrichtung 24, insbesondere des ersten Aktors der Gewichtkompensationsvorrichtung 24, insbesondere aller ersten Aktoren der Gewichtkompensationsvorrichtung 24, nach einer Regelungsgröße der Antriebsvorrichtung 52.

Die Steuereinheit 11 regelt die Kraftaufbringung der Gewichtkompensationsvorrichtung 24, insbesondere des ersten Aktors der Gewichtkompensationsvorrichtung 24, insbesondere aller ersten Aktoren der Gewichtkompensationsvorrichtung 24, so dass eine Größe der Antriebsvorrichtung 52, insbesondere des zweiten Aktors der Antriebsvorrichtung 52, insbesondere aller zweiten Aktoren der Antriebsvorrichtung 52, unterhalb eines Schwellwerts liegt. Die Größe der Antriebsvorrichtung 52 kann beispielsweise die Stromstärke des Stroms durch die Antriebsvorrichtung 52, die Antriebsleistung der Antriebsvorrichtung und/oder die Kraft, die die Antriebsvorrichtung 52 zum Halten und Bewegen der Last 1 aufbringen muss, sein. Der Schwellwert ist dann jeweils ein Stromschwellwert, ein Leistungsschwellwert und/oder ein Kraftschwellwert.

Insbesondere regelt die Steuereinheit 11 die Kraftaufbringung der Gewichtkompensationsvorrichtung 24, insbesondere des ersten Aktors, insbesondere aller ersten Aktoren der Gewichtkompensationsvorrichtung 24, so, dass die Kraft, die die Antriebsvorrichtung 52, insbesondere die der zweite Aktor, insbesondere alle zweiten Aktoren der Antriebsvorrichtung 52, zum Halten und Bewegen der Last 1, insbesondere der Last 1 und des Arbeitsgeräts, aufbringen muss unter einem Kraftschwellwert liegt. Insbesondere ist der Kraftschwellwert 800 N, insbesondere 700 N, insbesondere 500 N, insbesondere 150 N. Diese Werte gelten insbesondere für einen einzigen zweiten Aktor der Antriebsvorrichtung 52. Wenn mehrere zweite Aktoren vorgesehen sind, stellen die genannten Werte für den Kraftschwellwert die Gesamtsumme aller Kraftschwellwerte der einzelnen zweiten Aktoren, also einen Kraftschwellwert für die Antriebsvorrichtung 52 insgesamt dar.

Im Ausführungsbeispiel ist die Regelungsgröße für den elektrischen Antrieb des zweiten Aktors 52 der Strom. Die Kraft des ersten Aktors 24 wird so geregelt, dass die Antriebsenergie des zweiten Aktors 52, insbesondere die Stromstärke des elektrischen Stroms, mit dem der zweite Aktor 52 betrieben wird, minimal ist.

Die Steuereinheit 11 regelt die Kraftaufbringung der Gewichtkompensationsvorrichtung 24, insbesondere des ersten Aktors, insbesondere aller ersten Aktoren der Gewichtkompensationsvorrichtung 24, so, dass die Stromstärke des Stroms, der durch die Antriebsvorrichtung 52, insbesondere durch den zweiten Aktor, insbesondere durch alle zweiten Aktoren der Antriebsvorrichtung 52, zum Halten und Bewegen der Last 1 fließt unter einem Stromschwellwert liegt. Insbesondere ist der Stromschwellwert 5 A, insbesondere 3 A, insbesondere 2 A, im Ausführungsbeispiel 1 A.

Die Regelungsgröße, im Ausführungsbeispiel die Stromstärke des Stroms durch den zweiten Aktor wird gemessen und der Steuereinheit 11 zugeführt. Es kann auch vorgesehen sein, dass die Gesamtstromstärke aller zweiter Aktoren der Antriebsvorrichtung 52 gemessen und der Steuereinheit 11 zugeführt wird. In einer bestimmten Position des Haltemittels 10, insbesondere der Last 1, regelt die Steuereinheit 11 die von der Gewichtkompensationsvorrichtung 24, insbesondere von dem einen oder den mehreren ersten Aktoren der Gewichtkompensationsvorrichtung 24, aufzubringende Kraft so, dass die Gesamtstromstärke des einen oder aller zweiter Aktoren der Antriebsvorrichtung 52 minimal, insbesondere Null, wird.

Zur Messung des Motorstroms durch die Antriebsvorrichtung 52 umfasst das Arbeitsgerät ein Strommessgerät 53. Das Strommessgerät 53 misst die Stromstärke des Stroms, mit dem der zweite Aktor betrieben wird. Insbesondere misst das Strommessgerät 53 die Gesamtstromstärke aller Ströme, mit denen die zweiten Aktoren betrieben werden. Der Messwert des Strommessgeräts 53 wird der Steuereinheit 11 zugeführt.

In der Steuereinheit 11 laufen die zum Betrieb des Arbeitsgeräts erforderlichen Rechenoperationen ab. Die Steuereinheit 11 wird auch als Elektronikeinheit bezeichnet. Im Ausführungsbeispiel umfasst die Steuereinheit 11 eine Steuerungsführung 40, einen Positionsregler 54, einen Balanceregler 55 und einen Druckregler 37. Der von dem Strommessgerät 53 gemessene Wert wird dem Balanceregler 55 zugeführt.

Zur Einstellung der von der Gewichtkompensationsvorrichtung 24 aufzubringenden Kraft ist im Ausführungsbeispiel der Druckregler 37 vorgesehen. Die als Pneumatikzylinder ausgebildete Gewichtkompensationsvorrichtung 24 besitzt Pneumatikventile 38 und 39. Im Zylindergehäuse 46 des Pneumatikzylinders ist ein nicht dargestellter Kolben an einer Kolbenstange 45 angeordnet. Der Kolben trennt zwei Kammern des Zylindergehäuses luftdicht voneinander. Der Kolben ist in Längsrichtung des Zylindergehäuses 46 verschiebbar im Zylindergehäuse 46 gelagert. Auf jeder Seite des Kolbens ist ein Pneumatikventil 38, 39 angeordnet. Das Pneumatikventil 38 ist in einer Leitung von Druckluft zwischen dem Druckregler 37 und der ersten Kammer angeordnet. Das Pneumatikventil 39 ist in einer Leitung von Druckluft zwischen dem Druckregler 37 und der zweiten Kammer angeordnet. Nach bekanntem Prinzip kann der Druckregler 37 das Druckverhältnis der ersten Kammer zur zweiten Kammer so einstellen, dass die Kolbenstange 45 eine bestimmte Kraft auf das Bauelement 12 bewirkt.

Der Balanceregler 55 errechnet aus dem Istwert des Motorstroms Werte, die dem Druckregler 37 zugeführt werden und anhand derer der Druckregler 37 die Pneumatikventile 38 und 39 ansteuert und/oder mindestens einer Kammer des Zylindergehäuses 46 Druckluft zuführt und/oder aus mindestens einer Kammer des Zylindergehäuses 46 Luft ablässt.

Auf diese Weise wird die auf das Bauelement 12 durch die Gewichtkompensationsvorrichtung 24 wirkende Kraft so lange verändert, bis der von dem Strommessgerät 53 gemessene Stromwert unterhalb eines in der Steuereinheit 11, insbesondere in dem Balanceregler 35, hinterlegten Stromschwellwert liegt. Diese Regelung findet nach jeder Positionsveränderung des Haltemittels 10, insbesondere der Last 1, statt.

Die Steuereinheit 11 kann einen Sollwert für die Position des Haltemittels 1, insbesondere der Last 1, vorgeben. Hierfür umfasst die Steuereinheit 11 die Steuerungsführung 40. Die Steuerungsführung 40 gibt den Sollwert für die Position des Haltemittels 1 vor. Der Sollwert für die Position des Haltemittels 1 ist die Führungsgröße sowohl für Gewichtkompensationsvorrichtung 24 als auch für die Antriebsvorrichtung 52. Anhand dieser Führungsgröße werden sowohl die Gewichtkompensationsvorrichtung 24 als auch die Antriebsvorrichtung 52 geregelt.

Der Sollwert für die Position des Haltemittels 1, insbesondere der Last 1 wird dem Positionsregler 54 von der Steuerungsführung 40 übermittelt. Der Positionsregler 54 vergleicht den Sollwert für die Position des Haltemittels 1, insbesondere der Last 1 mit einem Istwert der Position des Haltemittels 1, insbesondere der Last 1. Aus der Differenz zwischen Sollwert und Istwert ermittelt der Positionsregler 54 einen Sollwert für die Stromstärke des Stroms, mit der die Antriebsvorrichtung 52, insbesondere der zweite Aktor, insbesondere alle zweiten Aktoren, betrieben werden. Der Sollwert für die Stromstärke wird von dem Positionsregler 54 in Form eines Stromsignals an einen Stromverstärker 56 übermittelt. Der Stromverstärker 56 verstärkt das Stromsignal. Hierbei wird das als Steuersignal in den Stromverstärker 56 eingehende Stromsignal in einen Betriebsstrom mit einer Betriebsstromstärke transformiert. Mit dieser Stromstärke wird dann die Antriebsvorrichtung 52, insbesondere der zweite Aktor, insbesondere alle zweiten Aktoren betrieben.

Wie beschrieben wird der Istwert des Motorstroms mit dem Strommessgerät 53 gemessen und anhand dieses Messwerts die von der Gewichtkompensationsvorrichtung 24, insbesondere von dem ersten Aktor, insbesondere von allen ersten Aktoren aufzubringen Kraft ermittelt und eingestellt.

Sollte sich hierbei die Position des Haltemittels 1, insbesondere der Last 1 verändern, regelt der Positionsregler 54 den Sollwert für die Stromstärke des Stroms zur Antriebsvorrichtung 52 nach. Der Regelkreislauf beginnt von vorne.

Das Arbeitsgerät umfasst einen Wegaufnehmer 43. Der Wegaufnehmer 43 detektiert die Position des Haltemittels 10, insbesondere der Last 1. Die Detektion der Position erfolgt zumindest mittelbar. Der detektiert Positionswert wird von dem Wegaufnehmer 43 an den Positionsregler 54 übermittelt.

Das Arbeitsgerät ist so ausgelegt, dass das Haltemittel 10 wahlweise von einem Werker manuell positionierbar ist oder zumindest abschnittsweise, insbesondere vollständig, automatisch mittels der Antriebsvorrichtung 52 bewegbar ist. Das Arbeitsgerät weist einen ersten Betriebsmodus und einen zweiten Betriebsmodus auf.

In dem ersten Betriebsmodus des Arbeitsgeräts ist das Haltemittel 10 zusammen mit der Last 1 zumindest abschnittsweise ohne Unterstützung durch die Kraft des Werkers mittels der Antriebsvorrichtung 52 automatisch bewegbar. Hierbei wird die Antriebsvorrichtung 52 von der Steuereinheit angesteuert, im Ausführungsbeispiel geregelt. Während der Bewegung durch die Antriebsvorrichtung 52 nimmt die Gewichtkompensationsvorrichtung 24 zumindest einen Teil der Gewichtskraft der Last 1, insbesondere der Last 1 und des Arbeitsgeräts, auf. Der erste Betriebsmodus entspricht der vorstehend beschriebenen automatischen Bewegung des Haltemittels 1 zusammen mit der Last 1 mittels der Antriebsvorrichtung 52 bei gleichzeitiger Aufnahme zumindest eines Teils der Gewichtskraft der Last 1, insbesondere der Last 1 und des Arbeitsgeräts, durch die Gewichtkompensationsvorrichtung 24.

In dem zweiten Betriebsmodus ist das Haltemittel 10 zusammen mit der Last 1 von einem Werker manuell positionierbar. Bei der manuellen Positionierung des Haltemittels 1 zusammen mit der Last 1 nimmt die Gewichtkompensationsvorrichtung 24 zumindest einen Teil der Gewichtskraft der externen Last 1, insbesondere der Last 1 und des Arbeitsgeräts, auf.

Die Antriebsvorrichtung 52 ist bei manueller Positionierung durch einen Werker aufgrund der vom Werker bewirkten Kraft über einen Freilauf 42 (Fig. 1) so vom Haltemittel 10 getrennt, dass keine Kraftübertragung zwischen Antriebsvorrichtung 52 und Haltemittel 10 stattfindet. Insbesondere kann sich eine Motorwelle der Antriebsvorrichtung 52 bei der manuellen Positionierung durch den Werker aufgrund der vom Werker bewirkten Kraft aufgrund des Freilaufs 42 frei drehen. Der Freilauf 42 ermöglicht die manuelle Positionierung durch den Werker. Dadurch kann das Arbeitsgerät wahlweise im ersten Betriebsmodus oder im zweiten Betriebsmodus betrieben werden.

Die Einstellung des ersten Betriebsmodus oder des zweiten Betriebsmodus erfolgt durch Betätigung der Steuereinheit 11 durch den Werker. Im Ausführungsbeispiel ist die Steuereinheit 11 im Bereich des Haltemittel 10 für die Last 1, insbesondere am freien Ende 20 des vertikalen Schwenkarms 17, angeordnet. Der Werker hat hierbei gleichzeitig Zugriff auf die Last 1 und auf die Steuereinrichtung 11. Dies ermöglicht es ihm, die Last 1 manuell zu bewegen und gleichzeitig unterstützende Antriebsleistung von den Positionierantrieben 8, 9 durch Betätigen der Steuereinrichtung 11 abzurufen, was einem dritten Betriebsmodus entspricht. Außerdem kann die Steuereinheit 11 das Arbeitsgerät im vollautomatischen ersten Betriebsmodus betreiben.

Eine Höhenverstellung der Last 1 durch Verschwenkung um die Schwenkachsen 22 kann durch Einsatz des Höhenantriebs 41 im ersten Betriebsmodus vollautomatisch, im zweiten Betriebsmodus rein manuell oder im dritten Betriebsmodus durch die Kraft des Werkers unterstützt durch den Höhenantrieb 41 erfolgen. Der Höhenantrieb 41 wird hierbei von der Steuereinheit 11 eingesetzt, insbesondere gesteuert, insbesondere geregelt.

Im Ausführungsbeispiel stützt sich der Höhenantrieb 41 zumindest mittelbar am Grundkörper 14 ab. Im Ausführungsbeispiel ist eine Schiene 48 am Grundkörper 14 festgelegt. Der Höhenantrieb stützt sich unmittelbar über Rollen an der Schiene 48 ab.

Um der Steuereinheit 11, insbesondere der Führungssteuerung 40 eine Positionsabfolge vorgeben zu können, kann der zweite Betriebsmodus genutzt werden. Bei manueller Positionierung des Haltemittels 1, insbesondere des Haltemittels 1 zusammen mit der Last 1, durch den Werker detektiert der Wegaufnehmer 43 die Positionen des Haltemittels 1, insbesondere der Last 1. Der Wegaufnehmer 43 übermittelt die Positionen als Positionswerte an die Steuereinheit 11, insbesondere an den Positionsregler 54. Die Steuereinheit 11 verknüpft die Positionswerte mit Zeitwerten. Die manuelle Positionierung im zweiten Betriebsmodus kann genutzt werden, um das Arbeitsgerät für einen automatischen Betrieb im ersten Betriebsmodus anzulernen. Die Steuereinheit 11 ist so ausgelegt, dass sie die detektierten Positionswerte und die damit verknüpften Zeitwerte nutzt, um selbständig zu ermitteln, wie die Antriebsvorrichtung 52 und insbesondere die Gewichtkompensationsvorrichtung 24, bei zumindest abschnittsweiser automatischer Bewegung des Haltemittels 1, insbesondere zusammen mit der Last 1 anzusteuern ist.

Während der Werker das Haltemittel 0 mit der Last 1 im zweiten Betriebsmodus mehrfach manuell von einer Startposition zu einer Endposition führt, werden der Steuereinheit 11, Positionswerte und Zeitwerte zugeführt. Hieraus ermittelt die Steuereinheit 11, wie die Antriebsvorrichtung 52 bei zumindest abschnittsweiser automatischer Bewegung des Haltemittels 1 anzusteuern ist, um die Last 1 mittels des Haltemittels 10 von der Startposition zu der Endposition zu bewegen, insbesondere, um die Last 1 mittels des Haltemittels 1 in der Endposition zu positionieren.

Das Arbeitsgerät umfasst eine Gewichtskraftmesseinrichtung 44. Die Gewichtskraftmesseinrichtung 44 dient zur zumindest mittelbaren Bestimmung der Gewichtskraft der Last 1, insbesondere der Last 1 und des Arbeitsgeräts. Der Wert der Gewichtskraft wird von der Gewichtskraftmesseinrichtung 44 der Steuereinheit 11, insbesondere dem Positionsregler 54, zugeführt.

Es kann vorgesehen sein, dass die Steuereinheit 11, insbesondere der Positionsregler 54, so ausgelegt ist dass der Wert der Gewichtskraft, insbesondere alternativ oder zusätzlich zu den Positionswerten und/oder den Zeitwerten, genutzt wird, um selbstständig zu ermitteln, wie die Antriebsvorrichtung 52 bei zumindest abschnittsweiser automatischer Bewegung des Haltemittels 1 anzusteuern ist, um die Last 1 mittels des Haltemittels 1 von der Startposition zu der Endposition zu bewegen, insbesondere, um die Last 1 mittels des Haltemittels 1 in der Endposition zu positionieren. Insbesondere während des mehrfachen manuellen Führens des Haltemittels 1 mit der Last 1 durch den Werker von der Startposition zu der Endposition können die Gewichtskraftwerte von der Steuereinheit 11, insbesondere zeit- und/oder ortsaufgelöst aufgenommen werden.

Die Kraftaufbringung der Gewichtkompensationsvorrichtung 24 kann in Abhängigkeit des Positionswerts des Haltemittels 10 und/oder des Gewichtkraftwerts durch die Steuereinheit 11 geregelt werden.

Es kann vorgesehen sein, dass die Steuereinheit 11 die Gewichtkompensationsvorrichtung 24 in den verschiedenen Höhenpositionen des Haltemittels 10 so ansteuert, dass die Balanceeinheit 13, insbesondere die Gewichtkompensationsvorrichtung 24 mindestens 90%, insbesondere mindestens 95%, insbesondere mindestens 98%, im Ausführungsbeispiel mindestens 99% der Gewichtskraft der Last 1, insbesondere der Last 1 und des Arbeitsgeräts aufnimmt, insbesondere kompensiert. Es kann auch vorgesehen sein, dass die Steuereinheit 11 die Gewichtkompensationsvorrichtung 24 in den verschiedenen Höhenpositionen des Haltemittels 10 so ansteuert, dass die Balanceeinheit, insbesondere die Gewichtkompensationsvorrichtung 24, 100% der Gewichtskraft der Last 1, insbesondere der Gewichtskraft der Last 1 und des Arbeitsgeräts, aufnimmt.

In Fig. 3 ist eine Antriebseinheit 60 gestrichelt markiert. Die Antriebseinheit umfasst zumindest die Gewichtkompensationsvorrichtung 24 und die Antriebsvorrichtung 52.

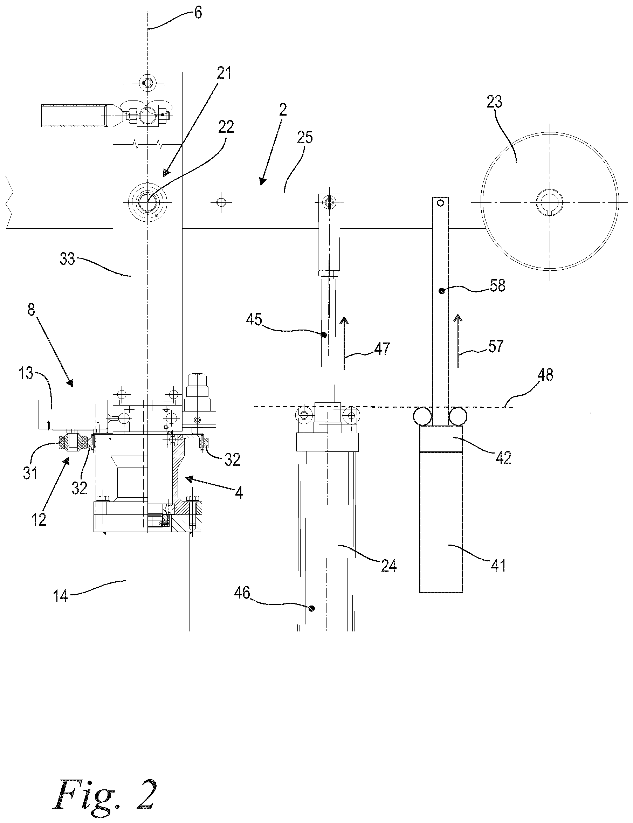

Wie in Fig. 2 schematisch dargestellt, ist die Gewichtkompensationsvorrichtung 24, insbesondere das Zylindergehäuse 46, an einer Schiene 48 des Arbeitsgeräts derart längsverschiebbar gelagert, dass sich die Auszugsrichtung 47 der Kolbenstange 45 immer parallel zur Gewichtskraftrichtung 50 der Last 1 einstellt. Im Ausführungsbeispiel ist das Zylindergehäuse 46 mittels Rollen an der Schiene 48 gelagert. Die Schiene 48 erstreckt sich in Richtung quer, im Ausführungsbeispiel in Richtung senkrecht, zu Gewichtskraftrichtung 50.

Das Haltemittel 10 ist zumindest mittelbar schwenkbar an dem Arm 2 gelagert. Der Arm 2 wird auch als Schwenkarm bezeichnet. Der Arm 2 ist um die horizontale Schwenkachse 22 schwenkbar. Die Schwenkachse 22 teilt den Am 2 in einen Lastteil und in einen Antriebsteil. Das Haltemittel 10 ist dem Lastteil zugeordnet. Das Haltemittel 10 ist im Ausführungsbeispiel mittelbar am Arm 2 gehalten. Es kann aber auch vorgesehen sein, dass das Haltemittel 10 unmittelbar am Schwenkarm gehalten ist. Die Gewichtkompensationsvorrichtung 24 greift im Antriebsteil des Arms 2 am Arm 2 an.

Im Ausführungsbeispiel ist auch zumindest ein Teil der Antriebsvorrichtung 52, insbesondere zumindest ein zweiter Aktor (im Ausführungsbeispiel der Höhenantrieb 41) der Antriebsvorrichtung 52, insbesondere alle zweiten Aktoren der Gewichtkompensationsvorrichtung 24 derart längsverschiebbar gelagert an der Schiene 48 des Arbeitsgeräts gelagert, dass sich eine Auszugsrichtung 47 einer Kolbenstange 58 der Antriebsvorrichtung 52, insbesondere des zweiten Aktors (des Höhenantriebs 41) immer parallel zur Gewichtskraftrichtung 50 der Last 1 einstellt. Im Ausführungsbeispiel ist der zweite Aktor, insbesondere der Höhenantrieb 41, als Elektrozylinder ausgebildet. Der Elektrozylinder besitzt die Kolbenstange 58.

Es kann vorgesehen sein, dass die Antriebsvorrichtung 52, insbesondere der zweite Aktor, insbesondere alle zweiten Aktoren im zweiten Betriebsmodus als Generatoren betrieben werden.

Das Arbeitsgerät zum Halten und Bewegen der externen Last 1 wird mittels eines Verfahrens so betrieben, dass die Antriebsvorrichtung 52 so von der Steuereinheit 11 angesteuert, insbesondere geregelt, wird, dass das Haltemittel 10 zusammen mit der Last 1 durch die Antriebsvorrichtung 52 automatisch bewegt, insbesondere positioniert, wird, und dass währenddessen zumindest ein Teil der Gewichts-kraft der externen Last 1, insbesondere der Last 1 und des Arbeitsgeräts, durch die Gewicht-kompensations¬vorrichtung 24 aufgenommen wird. Im Ausführungsbeispiel wird die Kraftauf bringung der Gewichtkompensations¬vorrichtung 24 mittels der Steuer-einheit 11 so angepasst, insbesondere geregelt, dass die von der Antriebsvorrichtung 52 aufzubringende Kraft unter einem Kraftschwellwert liegt. Insbesondere ist der Kraftschwellwert 800 N, insbesondere 700 N, insbesondere 500 N, im Ausführungsbeispiel 150 N.

## Patentansprüche

1. Arbeitsgerät zum Heben und Bewegen einer externen Last (1), umfassend:
- einen Grundkörper (14),
- ein Haltemittel (10) für die Last (1), wobei das Haltemittel (10) gegenüber dem Grundkörper (14) bewegbar ist,
- mindestens eine Antriebsvorrichtung (52), die zur Bewegung des Haltemittels (10) zusammen mit der Last (1) ausgelegt ist, und
- eine Steuereinheit (11) zur Steuerung der Antriebsvorrichtung (52), wobei das Haltemittel (10) zusammen mit der Last (1) von der Steuereinheit (11) mittels der Antriebsvorrichtung (52) zumindest abschnittsweise automatisch bewegbar ist,
**dadurch gekennzeichnet, dass** das Arbeitsgerät eine Gewichtkompensationsvorrichtung (24) zur Aufnahme zumindest eines Teils der Gewichtskraft der externen Last (1), insbesondere während der automatischen Bewegung der Last (1) mittels der Antriebsvorrichtung (52), umfasst, wobei die Kraftaufbringung der Gewichtkompensationsvorrichtung (24), insbesondere mittels der Steuereinheit (11), anpassbar ist.

2. Arbeitsgerät nach Anspruch 1,
**dadurch gekennzeichnet, dass** der Grundkörper (14) mittels zumindest eines Bauelements (2) mit dem Haltemittel (10) zum Heben und Bewegen des Haltemittels (10) zusammen mit der Last (1) mechanisch verbunden ist, dass eine Bewegung des Haltemittels (10) zusammen mit der Last (1) durch die Bewegung des zumindest einen Bauelements (2) relativ zum Grundkörper (14) in eine Bewegungsrichtung bewirkt werden kann, dass die Gewichtkompensationsvorrichtung (24) mindestens einen ersten Aktor umfasst, dass die Antriebsvorrichtung (52) mindestens einen zweiten Aktor (41) umfasst, und dass sowohl der erste Aktor als auch der zweite Aktor (41) unmittelbar auf das zumindest eine Bauelement (2) einwirken, insbesondere beide an dem zumindest einen Bauelement (2) unmittelbar gelagert sind.

3. Arbeitsgerät nach Anspruch 2,
**dadurch gekennzeichnet, dass** sowohl der erste Aktor alleine als auch der zweite Aktor (41) alleine derart auf das zumindest eine Bauelement (2) einwirken können, dass auf das zumindest eine Bauelement (2) durch den ersten Aktor alleine oder durch den zweiten Aktor (41) alleine eine Kraft auf das Bauelement (2) in dieselbe Bewegungsrichtung wirkt.

4. Arbeitsgerät nach Anspruch 2 oder 3,
**dadurch gekennzeichnet, dass** zwischen dem Grundkörper (14) und dem Haltemittel (10) mehrere Bauelemente angeordnet sind, dass die mehreren Bauelemente gegeneinander beweglich sind, und dass jedem Bauelement ein erster Aktor und ein zweiter Aktor zugeordnet ist.

5. Arbeitsgerät nach einem der Ansprüche 1 bis 4,
**dadurch gekennzeichnet, dass** das Haltemittel (10) von der Steuereinheit (11) mittels der Antriebsvorrichtung (52) in eine Endposition des Haltemittels (10) positionierbar ist, und insbesondere dass das Haltemittel (10) vollautomatisch von einer Startposition des Haltemittels (10) in eine Endposition des Haltemittels (10) bewegbar, insbesondere positionierbar ist.

6. Arbeitsgerät nach einem der Ansprüche 1 bis 5,
**dadurch gekennzeichnet, dass** die von der Antriebsvorrichtung (52) zum Bewegen des Haltemittels (10) aufbringbare Kraft maximal 500 N, insbesondere maximal 150 N beträgt.

7. Arbeitsgerät nach einem der Ansprüche 1 bis 6,
**dadurch gekennzeichnet, dass** das Arbeitsgerät, insbesondere die Gewichtkompensationsvorrichtung (24), so ausgelegt ist, dass mittels des Haltemittels (10) eine externe Last (1) mit einem Gewicht von mindestens 10 kg, insbesondere von mindestens 30 kg, insbesondere von mindestens 100 kg gehalten werden kann.

8. Arbeitsgerät nach einem der Ansprüche 1 bis 7,
**dadurch gekennzeichnet, dass** die Gewichtkompensationsvorrichtung (24) zumindest einen Motor umfasst, und insbesondere dass die Gewichtkompensationsvorrichtung (24) einen pneumatischer und/oder einen hydraulischen Zylinder und/oder einen elektrischen Antrieb umfasst.

9. Arbeitsgerät nach einem der Ansprüche 1 bis 8,
**dadurch gekennzeichnet, dass** das Haltemittel (10) gegenüber dem Grundkörper (14) in Gewichtskraftrichtung (50) der Last (1) und/oder in zumindest einer Positionierrichtung (51) bewegbar ist, wobei die Positionierrichtung (51) in einer Ebene quer, insbesondere senkrecht, zur Gewichtskraftrichtung (50) verläuft, und dass die Antriebsvorrichtung (52) zum Bewegen des Haltemittels (10) in Positionierrichtung (51) und/oder in Gewichtskraftrichtung (50) ausgelegt ist.

10. Arbeitsgerät nach Anspruch 9,
**dadurch gekennzeichnet, dass** die Antriebsvorrichtung (52) zumindest einen Positionierantrieb (8, 9) zum Bewegen des Haltemittels (10) in Positionierrichtung (51) und/oder zumindest einen Höhenantrieb (41) zum Bewegen des Haltemittels (10) in Gewichtskraftrichtung (50) umfasst, und insbesondere dass der Positionierantrieb (8, 9) und/oder der Höhenantrieb (41) ein Elektromotor, insbesondere ein Servomotor, ist.

11. Arbeitsgerät nach einem der Ansprüche 1 bis 10,
**dadurch gekennzeichnet, dass** das Arbeitsgerät so ausgelegt ist, dass das Haltemittel (10) wahlweise von einem Werker manuell positionierbar ist oder zumindest abschnittweise automatisch mittels der Antriebsvorrichtung (52) bewegbar ist.

12. Arbeitsgerät nach einem der Ansprüche 1 bis 11,
**dadurch gekennzeichnet, dass** die Steuereinheit (11) die Kraftaufbringung der Gewichtkompensationsvorrichtung (24), insbesondere des ersten Aktors, insbesondere aller ersten Aktoren der Gewichtkompensationsvorrichtung (24) so regelt, dass eine Größe der Antriebsvorrichtung (52), insbesondere des zweiten Aktors der Antriebsvorrichtung (52), insbesondere aller zweiten Aktoren der Antriebsvorrichtung (52), unterhalb eines Schwellwerts liegt, und insbesondere so regelt, dass die Stromstärke des Stroms, der durch die Antriebsvorrichtung (52), insbesondere durch den zweiten Aktor, insbesondere durch alle zweiten Aktoren der Antriebsvorrichtung (52), zum Halten und Bewegen der Last (1), insbesondere der Last (1) und des Arbeitsgeräts, fließt unter einem Stromschwellwert liegt, und insbesondere dass der Stromschwellwert 5 A, insbesondere 3 A, insbesondere 2 A, insbesondere 1 A ist.

13. Arbeitsgerät nach einem der Ansprüche 1 bis 12,
**dadurch gekennzeichnet, dass** das Arbeitsgerät einen Wegaufnehmer (43) umfasst, der die Positionen des Haltemittels (10), insbesondere der Last (1), zumindest mittelbar, insbesondere bei manueller Positionierung durch den Werker, detektiert und als Positionswerte an die Steuereinheit (11) übermittelt, insbesondere dass die Steuereinheit (11) die Positionswerte mit Zeitwerten verknüpft, und insbesondere dass die Steuereinheit (11) so ausgelegt ist, dass sie die detektierten Positionswerte, und insbesondere die damit verknüpften Zeitwerte, nutzt, um selbstständig zu ermitteln, wie die Antriebsvorrichtung (51) bei zumindest abschnittsweiser automatischer Bewegung des Haltemittels (10) anzusteuern ist.

14. Arbeitsgerät nach einem der Ansprüche 1 bis 13,
**dadurch gekennzeichnet, dass** die Gewichtkompensationsvorrichtung (24) Bestandteil einer Balanceeinheit (13) zur Aufnahme der Gewichtskraft externen Last (1) ist, und dass die Balanceeinheit (13) mindestens 95%, insbesondere mindestens 98% der Gewichtskraft der Last (1) aufnimmt, und insbesondere dass die Steuereinheit (11) die Gewichtkompensationsvorrichtung (24) in den verschiedenen Höhenpositionen des Haltemittels (10) entsprechend ansteuert.

15. Verfahren zum Betrieb eines Arbeitsgeräts zum Halten und Bewegen einer externen Last, wobei das Arbeitsgerät umfasst:
- einen Grundkörper (14),
- ein Haltemittel (10) für die Last (1), wobei das Haltemittel (10) gegenüber dem Grundkörper (14) bewegbar ist,
- mindestens eine Antriebsvorrichtung (52), die zur Bewegung des Haltemittels (10) zusammen mit der Last (1) ausgelegt ist, und
- eine Steuereinheit (11) zur Steuerung der Antriebsvorrichtung (52), wobei das Haltemittel (10) zusammen mit der Last (1) von der Steuereinheit (11) mittels der Antriebsvorrichtung (52) zumindest abschnittsweise automatisch bewegbar ist,
**dadurch gekennzeichnet, dass** das Arbeitsgerät eine Gewichtkompensationsvorrichtung (24) umfasst, dass die Kraftaufbringung der Gewichtkompensationsvorrichtung (24), insbesondere mittels der Steuereinheit (11), anpassbar ist, dass die Antriebsvorrichtung (52) so von der Steuereinheit (11) angesteuert wird, dass das Haltemittel (10) zusammen mit der Last (1) durch die Antriebsvorrichtung (52) automatisch bewegt, insbesondere positioniert, wird, und dass währenddessen zumindest ein Teil der Gewichtskraft der externen Last (1) durch die Gewichtkompensationsvorrichtung (24) aufgenommen wird.
